# EUROPEAN PATENT SPECIFICATION

(11) **EP 3 957 560 B1**
(45) Date of publication and mention of the grant of the patent: **15.11.2023**
(21) Application number: 21201064.9
(22) Date of filing: 07.12.2017
(51) Int. Cl.: B64C 15/00, B64C 27/20, B64C 29/00, B64C 39/02, B64C 15/02, B64D 33/04

(54) **IMPROVED THRUST SYSTEMS**
VERBESSERTE SCHUBSYSTEME
SYSTÈMES DE POUSSÉE AMÉLIORÉS

(43) Date of publication of application: 23.02.2022
(62) Divisional of application: 17306723.2
(73) Proprietor: Zipair, 13220 Chateauneuf-les-Martigues (FR)
(72) Inventor: ZAPATA, Frankie, 13740 LE ROVE (FR); ZAPATA, Chrystelle, 13620 CARRY-LE-ROUET (FR)
(74) Representative: Med'inVent Consulting

(56) References cited:
- EP-A2- 2 210 812
- WO-A1-2017/174942
- GB-A- 1 250 811
- US-A- 3 912 201
- US-A- 6 105 901

## Description

The present disclosure relates to passenger propulsion devices, in which one or more passengers can move through the air with enormous freedom of movement through agility and physical configuration.

Humans have always been preoccupied by being able to move around as freely as possible in space. Various efforts have been undertaken to achieve such a goal. For example, flying devices are provided in U.S. Patent Nos. 3,243,144 and 3,381,917 and, more recently, in U.S. Patent No. 7,258,301 or U.S. Patent Pub. No. 2013/0068895, which employ a distant fluid compression station. Despite such devices and disclosures, shortcomings in capacity and mobility remain for would-be pilots desirous of acrobatic capabilities, precision movement on or across water and land surfaces at high and low speeds in a manner allowing mass deployment and adoption.

US 3 912 201 A discloses a thrust system according to the preamble of claim 1. The present claimed invention is as defined by independent claim 1. Further aspects of the claimed invention are defined by the dependent claims 2-11.

A more complete understanding of the present disclosure, and the attendant advantages and features thereof, will be more readily understood by reference to the following detailed description when considered in conjunction with the accompanying drawings wherein:
- Figures 1A, 1B, 1C, 1D, 1E, 1F and 1G illustrate an example of a propulsion device not according to the appended claims;
- Figures 2A, 2B, 2C, 2D, 2E and 2F illustrate another example of a propulsion device not according to the appended claims;
- Figure 3 is a diagram of an example of a configuration of a thrust system of another example of a propulsion device not according to the appended claims;
- Figure 4 illustrates an exemplary interface and processing system for a propulsion device not according to the appended claims;
- Figure 5 illustrates an exemplary controller and processing system for a propulsion device not according to the appended claims;
- Figure 6 illustrates various aspects of examples of redundant systems for a propulsion device not according to the appended claims;
- Figure 7 illustrates various additional aspects of redundant systems for a propulsion device not according to the appended claims;
- Figure 8 illustrates a display and control input device for a pilot of a propulsion device not according to the appended claims;
- Figure 9 illustrates a process for a propulsion device not according to the appended claims;
- Figures 10A-10D illustrate an example of a thruster unit/engine system not according to the appended claims;
- Figures 11A-11D illustrate another example of a propulsion device not according to the appended claims;
- Figures 12A-12B illustrate an example of a thrust deflection system according to the appended claims except for the fact that only one actuator is shown;
- Figures 13A-13B illustrate an example of a thrust deflection system according to the appended claims;
- Figures 14A-14C illustrate an example of a thrust deflection system according to the appended claims; and
- Figures 15A-15E illustrate an example of a thrust deflection system not according to the appended claims

The present disclosure provides pro personal propulsion devices and improved control systems and methods of use thereof. The principles and features disclosed herein may be applied to different platform configurations to transport one or more passengers, cargo, instruments, tools, equipment, or the like. Examples of the numerous advantages provided herein include: increased and improved maneuverability; operational redundancy to maintain the safety of the pilot and possible passengers; increased system autonomy and thus the duration and/or distance of flight; take-off and landing capabilities within a particularly reduced area of only few square meters.

In one example of a propulsion device provided herein, the device consists of a body containing a platform arranged to accommodate the passenger and a thrust system. The thrust system may include at least a sub-thrust system containing at least two boosters; the ejection direction of the gas flow from each booster can be oriented along a quite normal axis on a longitudinal plane of the platform; the body of the device has means for supporting the thrust group working with the platform and being arranged to support the thrust system and minimize the distance between the ejection direction of the gas flows by the ejection nozzle of each booster and the orthogonal projection of the ejection direction of gas flow on a median plane passing by the center of gravity of the body of the device.

Depending on the configuration of the body of such a device, the latter can contain a second sub-thrust system working with the platform, the support means of the thrust system being arranged to support the second thrust system parallel to the first sub-thrust system, while minimizing the distance between a median plane passing by the center of gravity of the device body and the ejection direction of the gas flow by the ejection nozzle of each booster.

In order to increase the maneuverability of such a propulsion device, the platform can be arranged to the feet of the passenger to occupy a position, the height of which relative to the lowest point of the device, when the passenger is upright or approximately vertical on the platform and the booster ejection nozzles are oriented toward the ground, is: approximately equal to or greater than the height relative to the low point of the center of gravity of the body of the device, and lower at the height relative to the low point of the center of gravity of the whole thing including the device and the passenger.

To protect the thrust system of such a propulsion device, the body of the latter can have protrusions working with the platform and arranged to prevent any shock or direct contact between the ground and the thrust system of the device.

The boosters may include propellers and/or turbojets, and the boosters maybe arranged in a counter-rotation configuration. As an alternative or additionally, the support methods and/or the boosters of the thrust group can be arranged to orient the ejection direction of the gas flow by the respective ejection nozzles of the boosters at an angle between approximately -45° and approximately +45° with an axis parallel to a median axis of the platform.

To preserve the physical integrity of the passenger, a propulsion device depending on the disclosure can have a cowl, working with the platform or constituting a unitary construct with the platform, that is arranged to prevent any direct contact between the thrust system and the passenger. Additionally, the cowl can contain a grid arranged to partially obscure the fluid intakes of the boosters of the thrust system and thus prevent any inhalation of foreign bodies or debris by the fluid intakes. To keep the passenger on the body of the propulsion device, the latter can advantageously have methods to ensure that the passenger stays on the platform.

In order to more readily steer the propulsion device through a curved trajectory, the thrust group can have secondary cap correction boosters, the support methods of the boosters being arranged to work with the secondary cap correction boosters. The support methods can be advantageously arranged to maintain the later according to an orientation approximately parallel to a longitudinal plan of the platform.

Depending on the configuration of the platform, notably if it is elongated, like the chassis of an equivalent land vehicle like a motorbike or a car, the passenger may not be able to sufficiently affect the base of the platform by the orientation of their body. To help steer such a propulsion device, the thrust system can have secondary base correction boosters, the support methods of the boosters being arranged to work with the secondary base correction boosters. The support methods can be advantageously arranged to maintain the latter in an orientation approximately normal to a longitudinal plane of the platform.

To feed the thrust system of a propulsion device depending on the disclosure, the latter can advantageously have in addition a fuel tank connected to the boosters of the thrust system to feed fuel to the latter, the tank working alongside the body of the device or the passenger.

So that the passenger can carry the tank like a backpack, such a tank can have a flexible envelope and a harness to work with the body of the passenger, the attachments of which are designed to be easily removed by the passenger in the event of an emergency.

So that the passenger can steer their propulsion device, the latter can have a man-machine interface translating a passenger gesture into an instruction, the processing means of the instruction produced and the generation of a booster power order using the instruction produced, the booster power order being fed into the thrust system by means of communication.

Such a propulsion device can furthermore contain a base and/or trajectory sensor working with the body of the device roughly in the position of the center of gravity of the latter and with the processing means, the latter generating the booster power order from the information delivered by the base and/or trajectory sensor along with an instruction produced by the man-machine interface.

When the device has secondary cap correction boosters, to land the propulsion device, the processing methods, present on the body of the device, can generate power instructions from the secondary cap correction boosters from information delivered by the base and/or trajectory sensor to operate one of the secondary boosters and maintain the current trajectory of the body, in the absence of instruction produced by the man-machine interface.

In the same way, when the device has secondary base correction boosters, the processing methods, present on the body of the device, can generate orders of power from the secondary base correction boosters from information delivered by the base and/or trajectory sensor to one of the secondary base correction boosters and keep a base roughly horizontal to the body, in the absence of instruction produced by the man-machine interface.

An example of the preferred outcome, such a man-machine instruction interface can have a trigger which can be operated by one or several fingers of the passenger. The processing unit can then develop a booster power order to adjust the power developed by the thrust system according to the position of the trigger.

As an alternative or additionally, the man-machine instruction interface can have an angle measure sensor measuring the angle defined by the fist of a passenger compared to the longitudinal axis of the forearm in question compared to a reference position according to which the hand of the passenger is aligned with the forearm. The processing unit can then develop a secondary booster power order to adjust the power developed by the latter according to the position of the fist.

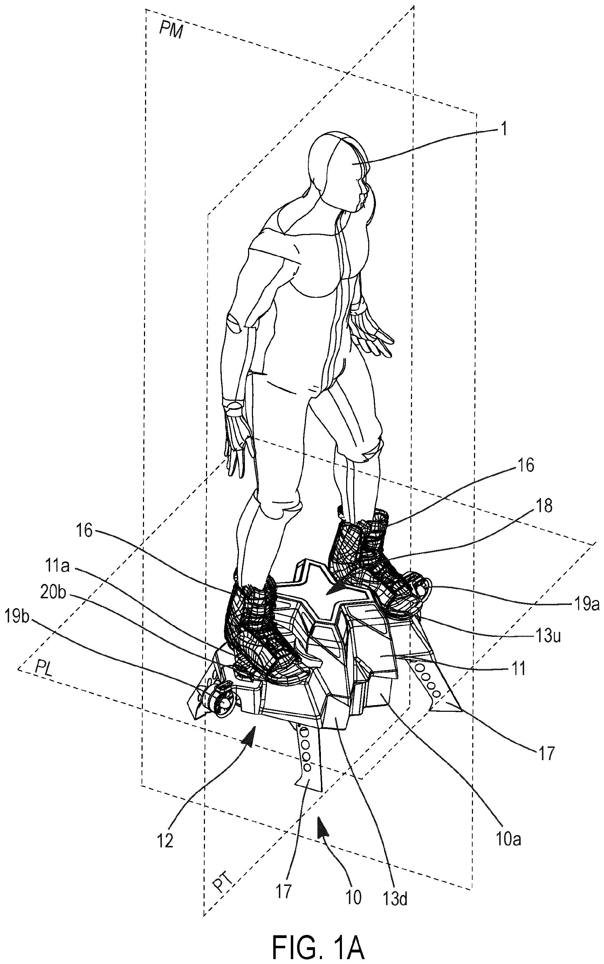

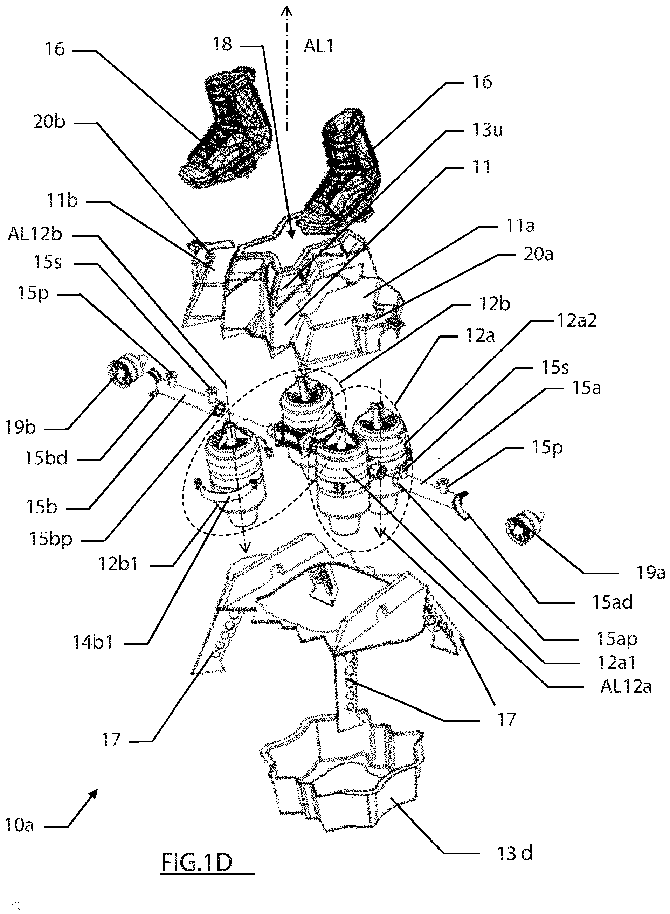

Figure 1A presents a view in perspective of an initial preferred version of a propulsion device for one passenger 1 depending on the disclosure. Such a device has a main body 10a in the form mainly of a platform 11 on which a passenger 1 can take their place. Depending on the dimensions of the platform 11 and the power from the thrust system 12 of the device 10, the disclosure envisages that several passengers can possibly take their places at the same time on the platform 11. The platform 11 presents, to this end, one or several places 11a arranged to take the feet or shoes of the passenger 1, as indicated more clearly in figure 1D.

The disclosure is envisaged so that such places 11a can have support methods 16 for the passenger 1 on the platform 11. Thus, according to the position wanted by the passenger 1 on the platform 11 of a device compliant with the disclosure, the support methods 16 can be a pair of shoes or fixed boots of a type similar to what you can find on a wakeboard. Other types of support methods may be preferred, depending on if you want to have a passenger in a position with "bent legs", kneeling, or even sitting.

Such a platform 11 can be advantageously designed using one or several materials presenting, alone or in combination, sufficient rigidity to support the weight of the passenger(s) and prevent thereby any excessive deformation.

The body 10a of the propulsion device described in conjunction with figures 1A and 1D has a thrust system 12 working with the platform 11.

As used herein, the following terms are used to describe features as follows:
- "median plane" MP/PM: any normal plane notably to platform 11, which separates a port half from a starboard half of the body 10a of the device 10, the halves not necessarily being equal;
- "transversal plane" TP/PT: any normal plane to a median plane, which separates the body 10a of the propulsion device into two halves, one consisting of the front, the other the back of the body, the halves not necessarily being equal;
- "longitudinal plane" LP/PL: any normal plane to transversal and median planes, the longitudinal plane separating an upper half from a lower half of the body 10a of the device 10, the halves not necessarily being equal.

Such MP, TP, LP planes are illustrated by dotted lines on Figure 1A. As used herein, the following terms are used to describe features as follows:
- "transversal axis": any axis belonging both to a transversal plane and a longitudinal plane;
- "longitudinal axis": any axis belonging both to a median plane and a longitudinal plane;
- "median axis": any axis belonging both to a median plane and a transversal plane.

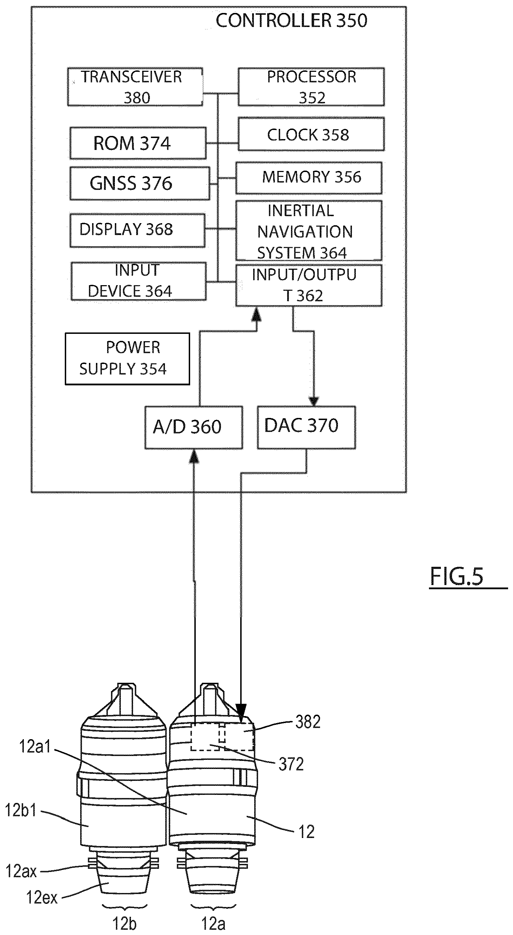

A propulsion device compliant with the disclosure has other accessory elements, not represented for simplification reasons in figure 1A, such as a fuel tank to feed the thrust system 12 or even a man-machine interface, with a remote control for example, so that the passenger 1 can interact with the thrust system 12 of the device 10. Such a man-machine interface shall be described in conjunction with Figure 5.

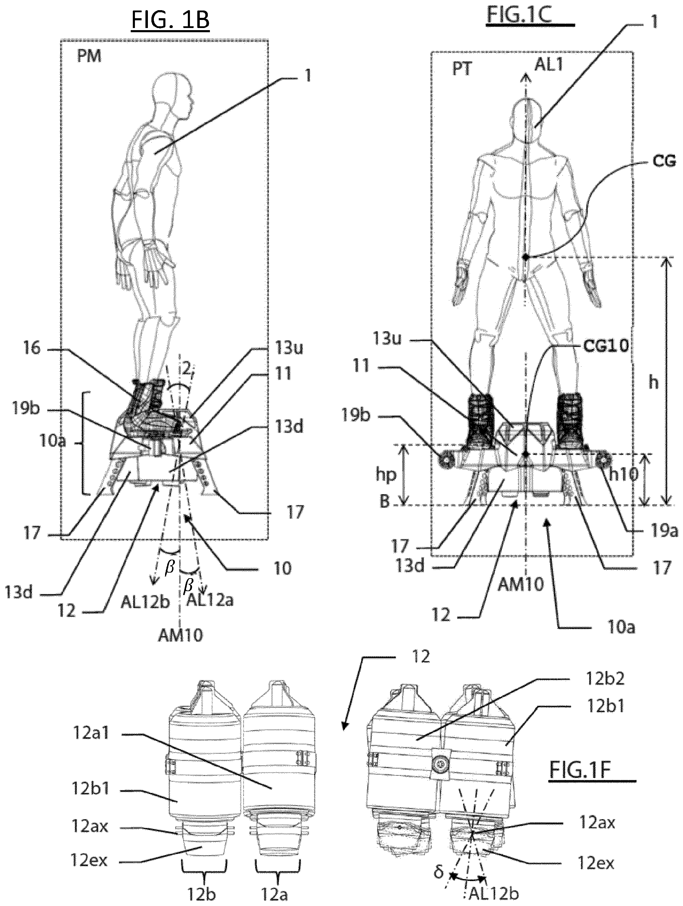

Figures 1B, 1C and 1D describe such an initial propulsion device according to the disclosure, respective of profile and face. We can observe in light of figures 1A, 1B and 1C, that the body 10a of such a device has protrusions 17, advantageously which can be retracted during flight, working with the platform 11 and arranged to prevent any shock or direct contact between the ground and the thrust system 12 of the device 10. The protrusions may be retractable through a telescoping, folding, or other collapsible configuration that reduces the profile and/or dimensions of the protrusions 17 at a desired stage of flight or use.

Such protrusions 17 can consist notable of four feet sufficiently long so that the ejection nozzles of the thrust system 12 do not hit the ground and to offer also a certain stability, when the device is on the ground or on a take-off station, not represented in figures 1A to 1C, so that the passenger can effectively take their position on the platform 11. As an alternative, such protrusions 17 may consist of a pair of skis or any other elements aimed at ensuring a certain stability according to the nature of the ground or the support of the device.

Figure 1D presents an exploded view of a body 10a of such a device compliant with the disclosure. As indicated in the figure 1D and as an unlimited example, contrary to the known devices, the thrust system 12 consists advantageously of a pair of sub-thrust systems 12a and 12b each having two boosters or engines. Thus, an initial sub-thrust system 12a has two boosters 12a1 and 12a2. The same is true for sub-thrust system 1b which has two boosters 12b1 and 12b2. As an alternative, such sub-systems may have more than two boosters. According to a second alternative, the thrust system 12 mat have more sub-thrust systems, themselves having one or several boosters. The example of configuration, described in liaison with figure 1D, although not limiting the disclosure, prevents certain qualities regarding other thrust system configurations. In effect, a device may develop with a thrust system reduced to a single booster/engine, for example a thermal turbojet type.

In effect, the length of such a single booster, so that it could produce sufficient thrust to send the device through the air and its passenger 1, would be about one meter, even more. In the same way, we could imagine a thrust system 12 with two sub-thrust systems each with one booster. The space taken up by each booster would be reduced, but such a thrust system 12 would have major disadvantage in terms of safety, like the one-booster configuration mentioned previously. In effect, if one of the two boosters fails, the total thrust of the system would be insufficient to maintain the passenger 1 in the air and to maintain sufficient maneuverability.

Contrary to these two possible configurations, a configuration as illustrated in liaison with figure 1D, according to which a thrust system 12 has at least two sub-thrust systems 12a and 12b each having at least two boosters 12a1 and 12a2 for one and 12b1 and 12b2 for the other, offers a particularly interesting compromise.

Thus, the space taken up by the four boosters, for example jets, remains completely compatible with the usage procedures wanted. on the other hand, the propulsion device remains perfectly maneuverable, even when one of the boosters fails.

To offer improved maneuverability, the boosters in the thrust system 12 are advantageously positioned more to the possible center of the body 10a of the device 10.

The inertia moment is thus reduced which the passenger must overcome using their body, the base the device and thus move.
- straight ahead, if the latter places the weight of their body towards the front of the device;
- backward, if the passenger 1 shifts their bodyweight to the back of the device;
- forward diagonal, if the passenger 1 shifts their bodyweight to the front of the device and to one of its sides;
- backward diagonal, if the passenger 1 shifts their bodyweight to the back of the device and to one of its sides;

To be able to pivot easily and change to turns, the thrust group 12 can favorably include two secondary propellers 19a and 19b cap correctors. The cap correctors are favorably offset across a transverse axis of the platform. By activating non-concurrently, these propellers respectively create a strong enough torque to create a curved trajectory.

The different propellers of the thrust group maintained and supported by the supporting means 14; an example of the structure will be described below. These supporting means 14 are the functional equivalence of a chassis supporting the platform 11 and cooperating through an advantageous mechanical connection, without any degree of liberty or embedded connection with the protruding means 17, providing a seat and protection of the thrust group 12 of this device 10.

Together with the realization example described by figure 1D, the body 10a of a propulsion device according to the disclosure can include a fairing 13u cooperating with the platform 11 and/or the supporting means 14, by any reversible or irreversible embedded mechanical connection (e.g. welding, screwing) or working with the platform 11 and/or supporting means 14 as a single physical entity. The purpose of the fairing 13u is to prevent any direct contact between the propulsion group 12 and the passenger 1. The morphology (sizes, shape) of the fairing 13u will be thus organized to adapt to the size of the thrust group 12, to give is a finish and/or tend to the aerodynamics of the propulsion device, all while limiting any discomfort for the passenger. It is invaluable to be able to limit any contact between the passenger and the thrust group to prevent any risk of injury, the temperature of the outside walls of the thrust group 12 can quickly become very high. Furthermore, the upper part of the body 10a of the device 10, considerably located between the passenger's 1 feet has an input fluid 18, in this case an air input, to supply fluid to the propellers through their respective fluid inputs. The propellers include rotors that could injure the passenger 1 if they inadvertently put their hand in the fluid input 18. On other hand, suction of foreign elements (leaves, debris, volatile matter, etc.) through the fluid input 18 could disturb the functioning of the thrust group 12. For this purpose, the fairing 13u can advantageously include a grill, not shown in figure 1D, the configuration of which partially covers the input 18 and thus limits or prevents the suction of foreign bodies through the air input 18, while preserving the fluid exchange between the outside world and the propellers.

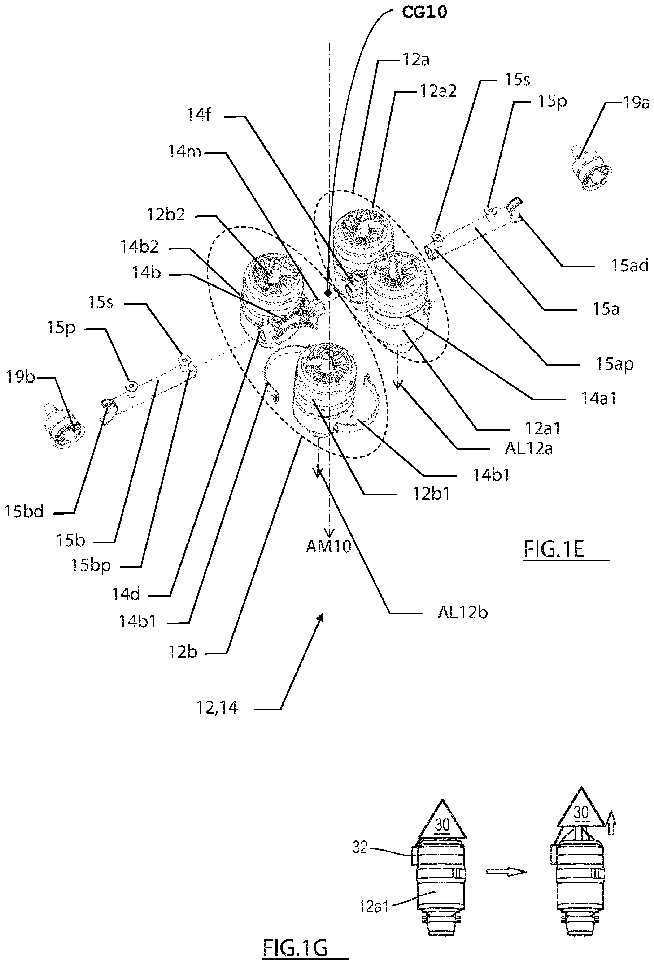

In addition and/or alternatively to the fairing 13u reducing the likelihood of debris intake, the device 10 may include one or more filters movably and/or selectively coupled to one or more of the boosters of the thrust systems. For example, as shown in FIG. 1G, an intake filter 30 may be movably coupled to an intake region of the booster 12a1 (and/or any of the other boosters 12a2, 12b1, 12b2, etc.). The intake filter 30 may have pass-through or filtration size appropriate to restrict passage of a particular debris size of concern (e.g., larger bodies such as leaves, or smaller, particulate matter such as sand and dirt) . The intake filter 30 may be selectively positionable about the intake region in a first position that substantially seals the intake filter to the intake of the booster, and a second position where the intake filter 30 is offset or at least partially removed from the intake region of the booster. In the first position, substantially all of the fluid flow into the booster must pass through the intake filter, while in the second position, fluid flow into the booster may at least partially bypass the intake filter 30. The movement of the intake filter 30 may be achieved through the use of a servo, actuator, motor, or other mechanism 32 providing a user or operator of the device 10 with the capability to selectively adjust the placement and position of the intake filter 30 during use. In one example, the intake filter 30 may be kept in the first position during takeoff and/or landing, when debris is more likely to be present and in proximity to the device. The intake filter may be moved to the second positon once the device 10 has achieved sufficient altitude where debris intake is minimized, and thus fluid flow into the booster can proceed uninhibited by the intake filter 30, which may provide an increased performance capability.

The figure 1D also describes the operating of a lower fairing 13d, working through any embedded mechanical connection, also providing a protective function to the passenger or the close environment from the fluid outputs or the ejection nozzles of the gas from the propellers of the thrust sub-groups 12a and 12b. Indeed, the temperature can be particularly high when in direct proximity to the ejection nozzles. This kind of open fairing offers a circumferential or lateral protection. Like the fairing 13u, which we can call the upper fairing, the geometry of the fairing 13d can furthermore be advantageously determined to not disturb the gas ejection of the thrust group and improve the aerodynamics of the device 10 body 10a. The choice of the material(s) planned to make up these fairing elements 13u and 13d will be based on the maximum temperature of the thrust group 12 in close proximity with the fairing elements, so that they do not alter their structure.

The 1D figure also describes the presence of secondary cap correcting propellers 19a and 19b, offset and laterally located, contrary to the thrust sub-groups 12a and 12b.

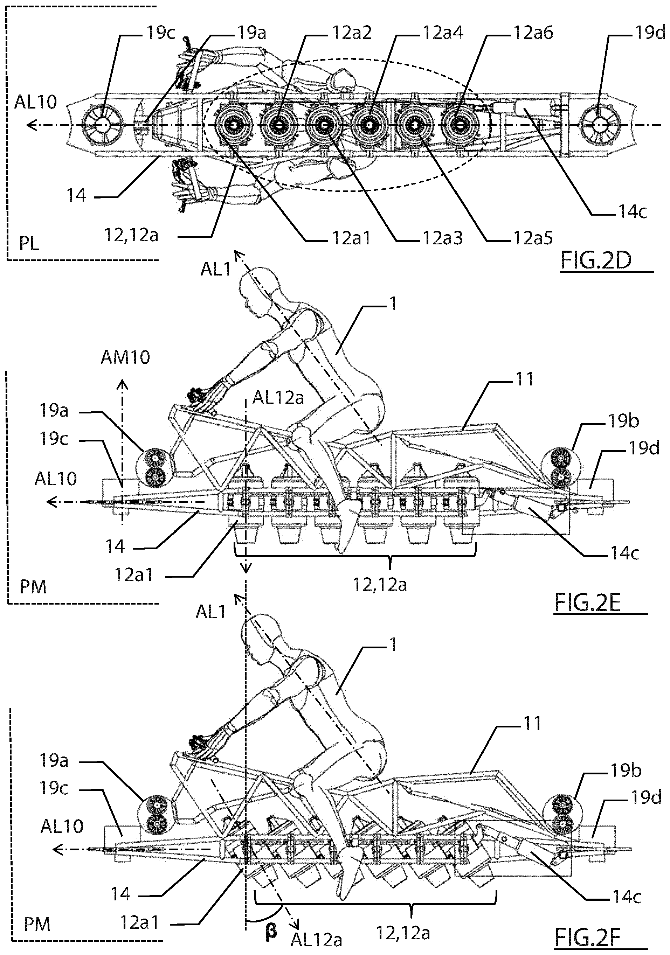

We will describe the supply of these secondary propellers in conjunction with the detailed presentation of a thrust group example illustrated by figure 2E.

Figure 1D does not describe most of the electronic elements for simplification. As an example, as we see in the description of the thrust group 12 in conjunction with figure 2E, the body 10a of a propulsion device, in accordance with the disclosure, includes or cooperates with instruction processing means for the passenger to steer the power of the propellers.

Furthermore, such processing means can also work with or include one or several sensors, such as, but not limited to, an inclinometer, an accelerometer, an altimeter, GNSS receiver, a GPS receiver (Global Positioning System), a probe or pitot tube and/or gyroscope, that can deliver information in connection with the base, the speed, or generally the trajectory of the body 10a of the device 10. The processing means are also arranged to develop propulsion power commands of the thrust group 12, particularly the propellers of the thrust sub-groups 12a and 12b, according to the passenger instructions and/or information produced by the sensors. Likewise, for creating power commands for the secondary cap correcting propellers 19a and 19b. Such processing means can be reflected in the form of one or several electronic boards. advantageously positioned close to the center of inertia and CG of the body 10a of the propulsion device 10, especially if the sensors are included in the electronic boards. Figure 1C particularly illustrates the virtual position of the center of gravity (CG) of the body 10a in the example of the implementation of the propulsion device 10. In the rest of the document, we consider the terms "processing means of the propulsion device body or present in the body" as covering any arrangement allowing, in particular, to:
- Set the processing system in or on the body 10a, for example on the platform 11 and/or the support system 14, 15a, 15b, and/or
- Connect the processing system with a terminal or coupling to the sensors and/or engines, when the processing system is set to be connected and/or disconnected by the passenger and/or conveyed by the passenger.

In conjunction with Figures 1C and 1E, we now study the structure of a preferred prototype of thruster unit 12, of the propulsion device of a first prototype of the disclosure and the support system 14 of such thrust force.

As mentioned above, such thruster unit 12 includes two thrusters 12a and 12b subunits, each comprising of two engines, referenced 12a1 and 12a2 for the first, and 12b1 and 12b2 for the second. Such engines may consist of propellers or rotors engines, or preferably, and in this case as shown in Figure 1E, of turbojet engines. A turbojet engine is a heat engine, commonly used in aviation, that transforms the potential energy contained in fuel, for example kerosene or equivalent, associated with a combustion, in this case ambient air sucked through the fluid inlet 18 of the body 10a, into kinetic energy. This kinetic energy generates an elastic environment reaction force in the opposite direction to the ejection of a gaseous discharge. This results in an acceleration of a certain amount of air between the engine fluid inlet and the exhaust nozzle thereof, producing thrust by expansion in the ejection nozzle. Such engine uses a blade or a rotor air compressor. Any other type of fuel could eventually be used instead of kerosene as mentioned above.

According to Figures 1C, 1D and 1E, we can consider that each engine of the thruster subunits 12a and 12b is adjustable and, in nominal operation, set according to a AL12a axis (for the engine 12a2) or AL12b (for the engine 12b1) substantially normal to a longitudinal plane of the platform 11, namely substantially parallel to a longitudinal axis AL1 of the passenger 1. These engines are set in a way so that the jet nozzle of each of these engines rejects a gas flow in a direction opposite to that of the longitudinal axis set to AL1, from the feet to the head of passenger 1. This way, the engines "push" the passenger 1 via the platform 11. As mentioned above, in particular to increase the maneuverability of the device 10, the main body 10a includes a support system 14 of the thruster unit 12, working together with platform 11, arranged to support the thruster unit 12 by focusing engines as centrally as possible of body 10a. Thus, these support system 14 minimize as much as possible the distance between the ejection directions of the gas stream AL12a and AL12b by the respective engine ejection nozzles 12a1, 12a2, 12b1, 12b2 and respective orthogonal projections of these in a virtual plane PM median via the center of gravity CG of body 10a of the device 10, these gas flow ejection directions being substantially parallel to the plane PM median. In the case of such a device, specifically the support system 14 is set to minimize the distance between the ejection directions and the virtual central axis AM of the body 10a through the center of gravity CG10. This reduces the moment of inertia that the passenger has to overcome to change, using his body, the level of body 10a and consequently the path of the propulsion of the device 10. Thus, the playful nature provided by the use of such propulsion device is tenfold.

According to the example shown in Figures 1C, 1D and 1E, the center of gravity CG of the body 10a is substantially located at the center of the two engines 12a and 12b of the thruster subunits. For a preferred but not limited to example, the support system 14 may comprise a plate thruster subunit on which are mounted by a mechanical connection fitting type of encircling collars respectively to the engines of each subunit. In this way, the engines of the same thruster subunit are held together and are set parallel to the longitudinal axes. Thus, two 14b1 and 14b2 collars encircle respectively 12b1 and 12b2 engines. The two collars are as well fixed on a plate 14b. It is the same for the engines of the 12a subunit. Two necklaces 14a1 and 14a2 respectively surround the 12a1 and 12a2 engines. The collars work together with plate 14a, mostly hidden in Figure 1E. The thickness of plates 14a and 14b is minimized by its environment for the engines of a same sub-unit are as close as possible to each other. Similarly, the support system 14 is set so that the proximal portions of the plates can work together, so that the thruster subunits are as close as possible. These proximal portions 14m, for plates 14b and 14f, for plate 14a, may suitably describe each one as a hollow cylinder. Sections of these cylinders are also suitably selected so that one of the proximal portions penetrates the second. Using holes opening on either side of each cylinder according to the normal axis to the revolution axis of the proximal portions 14f and 14m, and a pin for example, it is possible to secure the two thruster sub-units. It could alternatively be a mechanical link of welding embedding type to secure the two plates 14a and 14b.

These two plates are used to minimize the distance between each engine of 12a and 12b of the thruster subunits of a median plane of the platform 11 through the center of gravity CG of body 10a of the device 10.

When the engines of the two thruster subunits comprise the compressor rotors counter-rotating mounted, the ejection directions of the engines nozzles, for example the referenced directions AL12a and AL12b in Figure 2E, can be parallel to one another and substantially normal to the longitudinal plane of the platform 11.

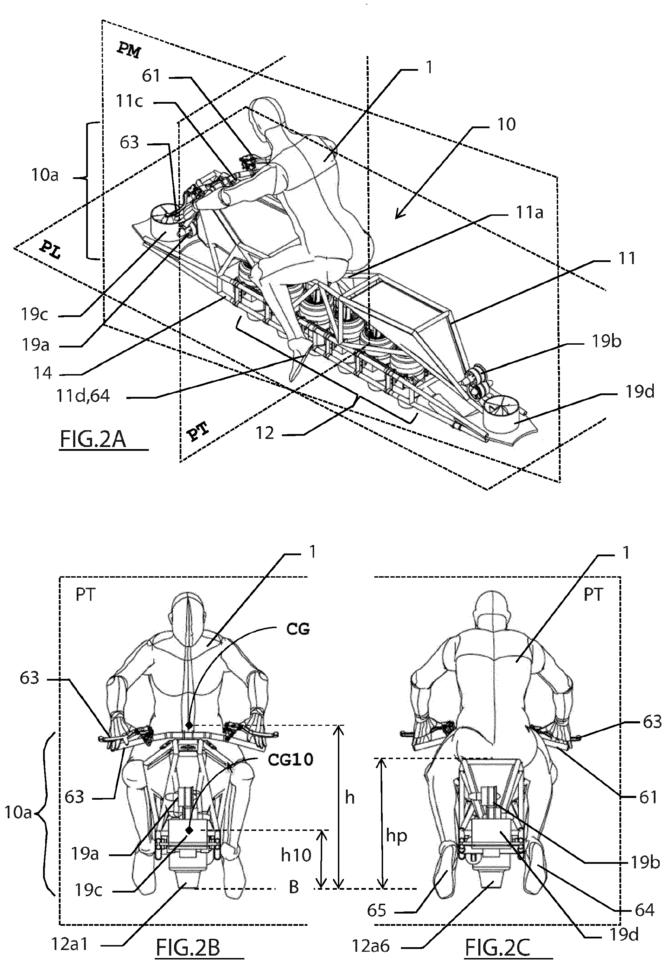

On the contrary, the rotation of the rotors within each engine could result in rotation on itself of the thruster assembly 12 and, consequently, the body 10a of the device 10. To overcome this inconvenience, the disclosure provides that the support system 14 can be set to guide the ejection direction of gas flow through the exhaust nozzle of each engine of each thruster sub-unit 12a and 12b, so that the gas flow ejection direction describes an β angle of between -10 ° and + 10 ° with a central axis AM of platform 11 or the body 10a. As shown in Figure 2B, it is possible to slightly cross the ejection directions of both 12a and 12b subunits forming an angle resulting from double of "β", referenced "2. B" in Figure 1B. A β angle of an absolute value of four degrees is sufficient to cancel the effect mentioned above, if the engines are not counter-rotating, without excessively penalizing the effective power surge of the thruster unit 12. Other β values could alternatively be recommended.

As shown in Figure 1E, a plurality of holes on the proximal portions 14m and 14f of the plates 14a and 14b are used to select the desired β angle. Alternatively, as mentioned above, the levelers may be set, with respect to each other in the factory by welding.

To associate the thruster subunits 12a and 12b of the course corrector secondary engine 19a and 19b and thus allow curved trajectories, the support system 14 of a device according to the disclosure, work together with secondary support system 15a and 15b for operating in conjunction with course corrector secondary engine 19a and 19b and maintain them in a substantially parallel thrust vectoring to a longitudinal axis of the platform 11. Thus, as described as a non-limiting example in Figure 2E, the plates 14a and 14b can work together respectively with the arms 15a and 15b, or more generally with the lateral extensions. According to the Figure 2E, the plates 14a and 14b have distal portions 14d, diametrically opposed to the proximal portions mentioned above. Like these, the distal portions are hollow circular sections substantially lower or greater than that of the proximal portions 15ap and 15bp of extensions 15a and 15b. Thus, the plates and extensions can work together as a constraining connection, optionally by welding or by pins, passing through the holes formed in the distal portions 14d of the plates 14a and 14b and the proximal 15ap and 15bp of the extensions 15a and 15b. Thus, this latter configuration allows it to adjust the relative direction of the extensions on these levelers.

Each extension 15a or 15b has a distal portion 15ad or 15bd arranged to encircle or generally to maintain a course corrector secondary engine 19a or 19b. Preferably, such secondary engine can consist of one or more electrical turbines. Such technological choice makes available a course corrector secondary engine 19a and 19b that is particularly reactive, more than some thermal engines, such as turbojets.

However, a layout of the course corrector thermal engines 19a and 19b, could be in the operation of a turbo engine, instead of each electric turbine, set substantially parallel to the engines of 12a and 12b thruster subunits. To maintain high reactivity, an output of directional fluid, of adjustable cone type of a fluid outlet of a jet ski, could operate together with the gas ejection nozzle of the secondary thermal engine. Placing this cone in a median plane of the platform 11, it is achieved a result close to one conferred by the use of electric turbines.

When the body 10a of a propulsion device according to the disclosure comprises a processing system, not only instructions of passenger 1, but also the trim sensors and/or trajectory of body 10a in space, the disclosure provides to operate with the use of the course correction secondary engine 19a and 19b, to help the passenger maintain the course, especially if weather conditions are unfavorable. Indeed, a strong and gusty wind can cause the propulsion device on a winding path, contrary to the will of the passenger. This can be balanced with an instructions interface, as discussed below in relation to Figure 5, but this balance may be fastidious in the long term.

The disclosure thus provides to adapt the processing system in the body 10a so that it develops throttle to the course corrector secondary engines 19a and 19b, so that these, in the absence of passenger instructions imply in any change of desired trajectory, maintaining the current course. For example, when a gust of wind tends to drive the propulsion device on a winding path to the right of the passenger, the processing system presented on the body 10a, develops a power control to the course corrector secondary engine 19b, so that is to say the one positioned to the right of the passenger 1, operating the secondary engine 19b that is enough to cancel this unexpected path change. The course correction secondary engine 19b is cut off as soon as the nominal trajectory is recovered. In this way, the propulsion system automatically maintains the current trajectory and discharges the passenger of any effort of balancing. The decision to prioritize the secondary electric engines is especially warranted in this prototype, because of the responsiveness required for such course correction secondary engines 19a and 19b so that it compensates for the vagaries of weather, unbeknownst to the passenger.

Furthermore, the prototype of the thrust unit 12 supported by the support system 14 of a device described on Figure 1E, presents the support system 14 with the extensions 15a and 15b respectively having a pair of protrusions or spacers 15p and 15s.

These are positioned according to a normal axis, longitudinal axis of each extension 15a or 15b to work together with platform 11. The latter can thus be fixed by screwing these protrusions, being threaded in this case. Any other way of jointly operation between the support system 14 and the platform 11 could be devised according to the disclosure.

According to Figure 1E, the 15p and 15s protrusions are respectively positioned on extensions 15a or 15b respectively near the distal and proximal portions of the extension. In addition to an assembly function with the platform 11, these protrusions allow to determine the relative height of the 11a tracks performed on platform 11 to accommodate the passenger 1's feet relative to the center of gravity CG of the body 10a of the propulsion device 10.

It was determined after confidential private testing and prototyping that the relative height of 11a tracks related to the center of gravity CG of the body 10a affects the maneuverability of the propulsion device 10. Thus, as shown in Figure 1C in particular, it is suitable to arrange platform 11 so that the 11a tracks have a hp height relative to the low point B (determined by the distal portions of the projecting system 17) of the body 10a of the device 10, when the passenger 1 occupies a substantially vertical position and the ejection nozzles of the engines of 12a and 12b thruster subunits are facing the ground:
- approximately equal to or greater than the height h10, relating to low point B, the center of gravity CG of body 10a of the device 10, and
- less than the height h relative to low point B, the center of gravity CG of the assembly including the device and the passenger 1.

Thus, the respective heights of the 15p and 15s protrusions help to adjust this configuration by regulating the height hp.

The 11a tracks located a few centimeters above the CG10 center of gravity, as presented in Figure 1C, provide excellent maneuverability to the propulsion device 10.

In order to supply fuel to main engines, that is the engines of 12a and 12b thruster sub-units; the disclosure provides that the fuel can be conveyed in one or more tanks not shown by the Figures for simplification purposes. As a non-limiting example, such a reservoir may comprise a rigid or flexible casing, a filling mouth and a drain mouth. It is thus possible to supply liquid or gaseous fuel to such a reservoir through the filling mouth. As a non-limiting example, such fuel can be kerosene, currently commonly suitable for conventional engines. However, alternative fuels could be used. This fuel is then supplied from this tank through the drain mouth arranged to work together with a supply conduit, not shown for simplicity purposes in the Figures, whose ends are respectively connected to the reservoir, more precisely to the drain mouth, for collecting the fuel and to a collection system, also not shown in the figures, for feeding the engines with fuel. Such collecting system supplies each of the heat engines with fuel. It thus works together by fluid connection with these engines and the tank.

Such tank can be intended to be carried by the passenger as a backpack or a parachute, with straps or harness, if possible Rally type, to immediately drop the tank in case of fire.

This type of harness is indeed deemed to comprise fasteners designed to be easily dissociated by the person hampered in emergency situations. Such a tank may also comprise a flexible envelope to increase passenger comfort and reduce the risk of injury to the latter during a fall for example. A tank may alternatively or additionally be fixed to the platform 11 or on the support system 14 of the thruster unit. According to a preferred prototype, when the tank is intended to be carried by passenger 1, the casing of this tank may be flexible, such as a pocket degassed before being filled with fuel. Such choice enhances comfort and passenger safety in case of fall and in particular prevents any risk of defusing the fuel of the engines.

The disclosure also provides that a source of electrical energy may be embedded in the main body 10a of a propulsion device 10. Such a source may consist of one or more batteries and/or photovoltaic cells, the latter serving as secondary sources for supplying low energy consuming electronics, such as the passenger's instructions processing system and preparation of power control of the thruster unit. However, the course correction secondary engines 19a and 19b presented above will require a more substantial source such as a battery or batteries, if these secondary engines are electric.

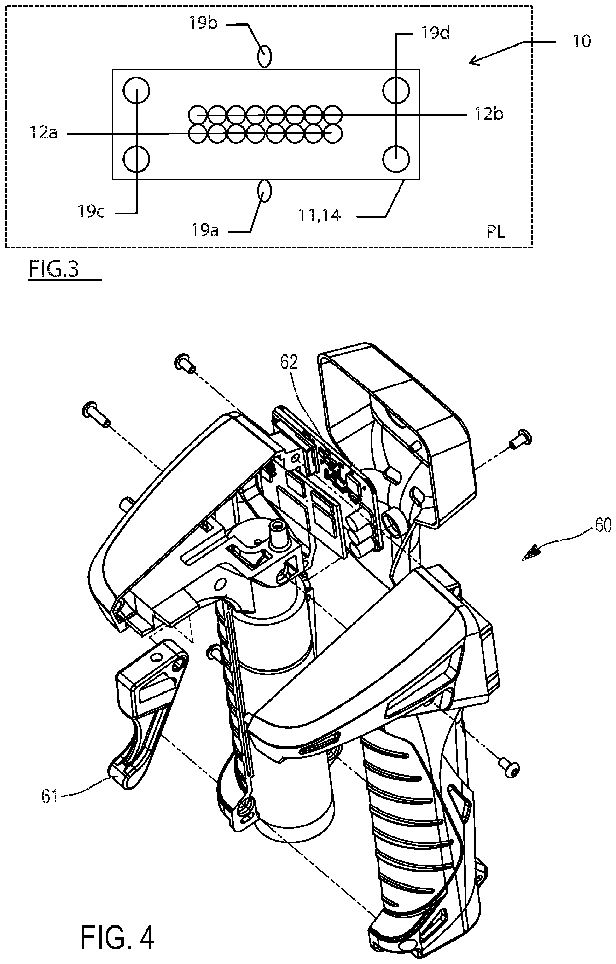

In order to control the power of the thrust force and also decide the movement trajectory, a passenger 1 with a propulsion device according to the disclosure may suitably use a man-machine instructions interface, whose primary function is translating gestural actions of this passenger 1 in a given set. Figure 4 shows an example of such man-machine interface or controller 60, as a remote control having a housing that can be held in the hand of passenger 1 or the instructor during training period. According to this non-limiting example, the interface 60 is similar to a gun-type remote control. It includes in particular a trigger 61 whose stroke can be interpreted as an instruction to increase the power of the thruster unit 12 when the trigger is operated by the passenger 1 or by the instructor, and this power reduces when such trigger is gradually released by the user. Such an interface 60 may also include other components such as one or more buttons, for example, not shown in Figure 4, by pushbuttons, eventually, establishing start or stop instructions to the thruster unit 12 to cut off the supply of a given engine.

This interface 60 may further comprise one or more sensors such as a gyroscope, an inclinometer, or an angle measuring sensor measuring the angle described by a wrist of the user whose hand is holding the interface 60 in the longitudinal axis of the forearm concerned with regards to a reference position in which the hand of this user is aligned with his forearm. The angle may measure a rotation or angular displacement along a longitudinal axis of the housing of the interface 60, which would run substantially perpendicular to an axis of a forearm of the operator when held at the operator's side. Thus, the wrist moving towards the inside of the user's body can mean the wish for rotating the device 10 to the left, if the user interface 60 holds it in his right hand. In other words, rotational movement of the interface 60 can be used to implement yaw and/or combined yaw/roll control aspects of the device 10, for example, via controlling operation of the primary and/or secondary engines 19a, 19b.

Conversely, a movement of the wrist movement to the exterior could mean the will to direct the trajectory of the device 10 to its right. Alternatively or in addition, the interface 60 may comprise an inclinometer. An inclination of interface 60 to the left or right by the user can then be translated to a desired trajectory direction of the device 10. Such direction instruction is then translated by a throttle command to 19a and 19b secondary engines described above. To interpret such gestures of the user, the interface 60, described by way of example in Figure 4, comprises an electronic processing system 62 with different information collected by the trigger 61 and other buttons and/or sensors of the interface 60 to produce interpretable instructions by the processing system with embedded instructions on the body 10a of the propulsion device 10. To route these instructions to this processing system, the interface 60 and the processing system on the body 10a of the device comprise a wire communication system or preferably wireless, for example via radio.

This processing system is set to be positioned near the center of gravity CG of the body 10a, is arranged to generate power controls the thruster unit 12 from instructions generated by the interface 60. Each power control is suitably fed to the related engine by wired communications. Such communication system is not represented in the Figures for simplification purposes.

We can also mention that the information related to the operation of the thruster unit may be developed by the processing system and returned to the passenger 1 via one or more graphical interfaces 20a and/or 20b, such as screens or LEDs, preferably positioned on the platform 11 as shown in Figure 1D, by a non-limiting example, close to 11a tracks.

To facilitate the ignition or starting the thruster unit 12 of the propulsion device according to the disclosure, it may be suitable to position the body 10a of this device so that the engines of the thruster sub-units 12a and 12b are substantially set horizontally. Indeed, fuel, such as kerosene, tends to flow prior to the ignition of the engines if it remained upright. The disclosure provides as such, a takeoff station set to enable to toggle body 10a when starting the thruster unit 12, and of positioning the body 10a so that a passenger 1 can easily take over the tracks 11a. Alternatively, the disclosure provides that the thruster unit 12 may be rotationally mounted along the transverse axis to the platform 11 to allow rotation of 90 ° and thus solve the inconvenience of guiding the body 10a if the thruster unit 12 works jointly in an embedded connection with the platform 11. After start of such a thruster unit 12 that is rotationally mounted, it is held stationary with respect to platform 11, as illustrated in Figure 1A-1C by all means.

The disclosure further provides a second prototype of a propulsion device according to the disclosure. A suitable example is presented by the Figures 2A to 2F.

The first and last example (described according to Figures 1A to 1E) is more intended for playful applications for which the agility of the driver and/or passenger(s) is often put to the test. To encourage more linear and less acrobatic movements, the disclosure provides the reinvention of the motorcycle as known today. Although structurally and physically different, such a second example of device is of similar design to that thereof described in conjunction with Figures 1A-1E.

Such "flying motorcycle" is described in particular by Figures 2A to 2F, through views respectively in perspective, front, back, bottom and side for the last two. Such a device comprises a platform 11, described in a very simplified way by Figures 2A to 2F, according to which we essentially only distinguish them only on its frame. The driver or passenger 1 can take possession of his craft like a conventional motorcycle on saddle 11a not shown for simplification purposes of platform 11. The latter thus has one or more areas 11a on which the pilot or passenger 1 can take over, preferably but not limited in seated position. The feet of the latter bear on footrests 11d armed with automatic hooks together with suitable shims under the shoes of the passenger 1, like clipless pedals of a cyclist on the road. Concerning the device 10, the wheels have obviously gone and are replaced by a thruster unit 12 including, in the example described in regards to Figures 2A and 2D, six engines referenced 12a1 to 12a6, preferably 3 thermal like engines of thruster unit 12 described above in regards to Figure 1E.

Unlike the thrust unit 12 described with the first prototype with two thrust 12a and 12b subunits, as shown in Figure 1E, the thruster unit 12 of this flying motorcycle has only one subunit 12 a thrust with at least two engines, in this case six substantially identical engines. The disclosure will not be limited to this example of layout of the thruster subunit 12. The number of engines thruster subunit 12a could be less or more than six. It is the same for the amount of thruster subunits. It could indeed be provided that the thruster unit 12 includes two rows or two thruster subunits mounted substantially parallel, like the device described related with Figure 1A, or even of an example of propulsion device as described by Figure 4 in a very simple view from below, for which platform 11 and support system 14 are also stretched in width. We will see later, in conjunction with Figure 3, the disclosure can also be applied to make a flying car.

The device described in Figure 2A may, but not limited to, include a pre-emption element 11c, equivalent to a motorcycle handlebar, to allow the passenger 1 to hold it with his hands. Such handle 11c may include a gas control lever associated with an angular sensor 61, such as a right or left rotation mounted handle, according to the preferences of the passenger 1. Such gas control lever 61 may be operated like the trigger 61 of the remote control 60 previously shown in Figure 4.

Such a lever 61, or more specifically the sensor associated with it to measure the course, may allow to transmit a power control command to the thruster unit 12. The handlebar and also plays a man-machine interface role to drive the machine. It could also include other instruction mechanisms, such as buttons, not shown in Figure 2A, to inform a start or stop command of the thruster unit 12, in particular.

Like a regular motorcycle, the handlebars may further comprise one or two brake handles 63 to transmit a deceleration setting to the thruster unit 12. The handlebar 11c may be rotation mounted, like that of a regular motorcycle, and include a sensor capable of issuing an angular measurement of the course of such handle 11c. This sensor can create a change in trajectory instruction, especially when the device moves at a slow speed, that is to say, a few kilometers per hour. At higher speeds, we will see later that the device will be active and/or only reactive to the inclination of the body 10a of the device 10, inclination imposed by movement of the passenger's body 1, for influencing on the trajectory and performing curved trajectories. Platform 11 or more generally the body 10a of the device includes a footrest 11d to accommodate the passenger 1's feet. Such footrests 11d or only the right or left footrests can very well include a pressure sensor 64 to deliver information that can be translated into a deceleration instruction, and such information being complementary or alternative to that related from the possible operation of the lever 63 of the handle 11c.

Finally, the second footrest, i.e. the left footrest, may include a sensor 6 sensitive to a rotation, referenced to the transverse axis to the body 10a of the device 10, of such footrest. A support of the forefoot of passenger 1 could mean a level inclination instruction of the device on the front of it which will thus "nosedive". Conversely, an actuation of the footrest by pressing the heel of that passenger 1 means an instruction order the device to go rear. All other instruction interface could be operated instead or in addition to 11c handlebar and/or footrest. As an example, the disclosure thus provides for electronic processing system, present on the body 10a of the device 10 that may operate information delivered by an inclinometer affixed to the passenger 1's clothing or accessory or integrated on the clothing or accessory. Due to the information provided by such sensor when the passenger 1 tilts his torso forward towards the handlebar 11c, the inclination of the torso of passenger 1 can be translated by an electronic processing system as a power increase instruction to the thrust unit 12 or an engine inclination of such unit 12, as we shall see later. Conversely, when the passenger 1 is recovering, a deceleration instruction can be developed by the electronic processing system of device 10. To develop such instructions and translate them to power commands to engines, like the device described related to Figures 1A to 1E, the device described in relation to Figures 2A-2F, and may further comprise such electronic processing system (not represented by these Figures for simplification purposes) consisting, for example, of one or more microcontrollers or arranged electronic cards, that is to say programmed to interpret the information delivered by such sensors 61, 63, 64 and translate into driving instructions.

The device may further include, but not limited to, an inclinometer, an altimeter, GNSS receiver, a GPS (Global Positioning System according to English terminology), a probe or a Pitot tube and/or a gyroscope, more generally all sensors to the electronic processing system to control the level, the speed or the trajectory of the body 10a of the device 10. For this purpose, the sensors operate with the electronic system by wired or wireless link. They are moreover useful for some, such as in particular, an inclinometer and/or a gyroscope positioned substantially near the center of gravity CG of the body 10a. Such a sensor, not shown by those Figures, work together by wire or by coupling, with jointly or complementary processing system to those mentioned above. Such systems consisting, for example, if separate, in one or more microcontrollers or electronic card(s), are well arranged, that is to say programmed to work together, by wire or by coupling, that is, via a wireless link using a communication protocol for short-range such as Bluetooth or equivalent type with the processing system arranged to produce one or more throttles, sent to some engines of the device 10 from information delivered by the level sensor and/or conjunction trajectory with one of the above mentioned instructions and produced through a man-machine interface distributed, unlike the remote control 60 described above in relation to the Figure that shows the main instruction mechanisms, i.e. comprised by the 11c handlebar and/or the footrest 11d or equivalent element, which the latter have sensors. As well as Figure 1A describing the prototype of a first propulsion device according to the disclosure, Figure 2A also allows us to define the various plans which we will call alternately "longitudinal", "transverse" or "median" respectively referenced PL, PT and PM in Figure 2A, according to which we describe in more detail the layout of the body 10a of a second example of the propulsion device 10.

Thus, it is understood as:
- "Median plane" PM: any normal plane including the platform 11, which separates a port half of a starboard half of the body 10a of the device 10, these halves are not necessarily equal;
- "Transverse plane" PT: any normal plane to a median plane that separates the body 10a of the propelling device in two halves, one having being the front and the other the rear of the body, these halves are not necessarily equal;
- "Longitudinal plane" PL: any normal plane to the transverse and median planes, the longitudinal plane separates the upper half from the lower half of the body 10a of the device 10, these halves are not necessarily equal.

Such plans PM, PT, PL are illustrated in 3 doted lines in Figure 2A. Similarly, it is called:
- "Transverse axis" means any axis belonging both to a transverse plane and a longitudinal plane;
- "Longitudinal axis" means any axis belonging both to a median plane and a longitudinal plane;
- "Median axis" means any axis belonging both to a median plane and a transverse plane.

The Figures 2A to 2F enable us to describe the layout of a thruster unit 12 of a preferred example of a flying motorcycle. The thruster unit 12 includes a thruster subunit 12a with six engines 12a1 12a6, according to this non-limiting example. These engines 12a1 to 12a6 are positioned and held by a support system 14, arranged so these engines are aligned along a longitudinal axis AL of the body 10a of the device 10, the longitudinal axes thereof, where the axis AL12a of engine 12a1 being substantially coincident with a median plane PM of the body 10a of the device 10, the median plane passing through the center of gravity CG of the latter. The respective ejection nozzles 12a1 to 12a6 of the engines are all mutually parallel. Thus, the direction of gas flow ejected by each ejection nozzle of each engine 12a1 to 12a6 is substantially opposite to the direction of a longitudinal axis set to AL1 from the torso to the passenger 1's head.

In connection with Figures 2E and 2F, it is seen that the support system 14 of engines 12a1 to 12a6 allow tilting of the engines in a β angle between -45° and 45°, or at least to tilt the β angle of AL12 axis of the respective gaseous fluid ejection outlets in a median plane PM of the body 10a of the device 10, in relation to a nominal direction of fluid ejection device described by Figure 3E, that is to say substantially normal to a longitudinal axis AL of body 10a of the device 10.

Thus, according to Figure 2E, the engines of the thruster unit 12 project the device in a vertical path. However, those engines create a forward movement of on the device 10, when the fluid ejection directions are set in accordance with Figure 2F. The fluid ejection directions of the engines of the same thruster subunit 12a can thus be directed at the instigation of a 14c actuator, such as a non-limiting example, an actuator, which when pressed it causes joint inclination of these gaseous outputs. Such actuator 14c can be controlled via commands generated by the processing system mentioned above and present on the body 10a of the device 10, for driving instructions from the passenger 1. For example, the actuator 14c may be at rest, as shown in Figure 2E, when the sensors 63 and/or 64 are biased by the passenger 1 thus delivering deceleration instruction. Conversely, this actuator 14c can be implemented, and result in the inclination of the engines of the thruster unit 12, under the command of a suitable control developed by the processing system when the passenger releases the pressure exerted on the sensor 64 or presses the handle 63, while operating the rotary handle 61 reflecting the will of the passenger 1 to increase the power of the thruster unit 12. This inclination becomes gradual and increasingly marked as and when the power of the thrust force increases and vice versa. A joint instruction for deceleration and for power increase of thruster unit 12 can mean a vertical displacement of the body 10a.

Like the device described in Figure 1C in particular, the body 10a of the device 10 of Figures 2B and 2C, is suitably arranged so that the area 11a of the platform 11, on which the passenger 1 takes position, has a height hp relative to low point B of the body 10a of the device 10, when the exhaust nozzles (or fluid outlets) of the thruster subgroup 12a engines are directed towards the ground:
- approximately equal to or greater than the height h relative to low point B of the center of gravity CG of body 10a of the device 10, and
- less than the height h relative to the low point B of the center of gravity CG of the assembly, including the device and the passenger 1.

Thus, the saddle height 11a of the passenger 1 can suitably be adjustable in height, depending on the weight or morphology of it or also by the feelings or behavior of the device searched by passenger 1, to provide each passenger 1 a propulsion device with very high maneuverability.

For easier rotation and movement in curves, the thruster unit 12 of such a device may very well include 19a and 19b course correction secondary engines. These can be supported by the support system 14 and be centrally arranged along a transverse axis of the platform 11, like the course correction secondary engines of the device described above in relation with Figure 1A.

Alternatively, to limit any inconvenience caused by the presence of the course correction secondary engines in centralized position, the disclosure provides that these course correction secondary engines can consist of two pairs 19a and 19b of engines arranged to eject fluid in opposite directions according to axes substantially parallel to a transverse axis of the body 10a. These two pairs 19a and 19b are held by the support system 14 in two positions respectively in front of and behind the area 11a of the platform intended to accommodate the passenger 1. Usefully, in order to increase their efficiency, these two pairs 19a and 19b are respectively located near the ends of the body 10a. The first function of these course correction secondary engines is to maintain the current course of the device in the absence of any will of passenger to make a curved path. For this, these secondary engines from each pair 19a and 19b can be controlled by an electric power control, created by the processing system mentioned above, taking into account the information provided by the one or more level and course sensors present on the body 10a, in the absence of any reference originating from the passenger 1 indicating a change in the desired path. Being actuated non-simultaneously, these propellers create sufficient torque to cause rotation about a central axis of the body 10a. Thus, when the engine of the pair 19a located at the front of the body 10a, the ejection nozzle discharges a fluid to the left of the body 10a and is actuated together with the engine 19b pair located at the rear of body 10a, the ejection nozzle discharges a fluid to the right of the body 10a, the latter moving automatically to the right and vice versa.

For example, when a gust of wind tends to drive the propulsion device of a winding path on the left or right of the passenger 1, the processing system present on the body 10a, develops drive power to the course correctors secondary engines 19a and 19b, operating one of the secondary engines of each pair, these engines being set so that the fluid ejection goes in opposite directions in order to cancel this change in unexpected path. These course correction secondary engines are cut off as soon as the nominal trajectory is recovered. In this way, the propulsion system automatically maintains the current trajectory and discharges the passenger 1 of any effort of balancing.

The decision to prioritize the secondary electric engines is especially warranted in this prototype, because of the responsiveness required for such course correction secondary engines 19a and 19b so that it automatically and instantly compensates for the vagaries of weather, unbeknownst to the passenger. However, as discussed with the previous prototype, thermal engines, could also have adjustable fluid outlets, that could be used instead of electric turbines.

These course correction secondary engines 19a and 19b also enable the passenger 1 to perform curved trajectories or lateral displacements, for example to the left or right of the body 10a. Thus, when the passenger uses the 11c rotation mounted handlebars, the processing system, responsible for developing the power controls to the secondary engines, uses the information created by the sensor measuring the angle made by the handlebars, to send a power command to one of the engines of each pair 19a and 19b, to create a curved path.

At high travel speed, such an instruction to change the course by the passenger 1 will be created by the processing system from the information sent by an inclinometer or a gyroscope present on the body 10a of the device. So when the passenger 1 sets laterally and voluntarily moves his body to tilt the body 10a of the device on his right, an instruction to change of course to the right passenger 1 will be developed by the processing system. These develop power controls on the course correction secondary engines accordingly, as previously mentioned on actuation of the handle 11c. It would be the same for voluntary inclination of the body 10a imposed by the passenger 1, reflecting the will of the latter to change the current course to his left. The presence of these course correction secondary engines 19a and 19b associated with the consideration of information provided by multiple sensors translating the movement of the body 10a and/or driving instructions from the passenger 1, thus provides excellent maneuverability on the propulsion device 10. According to a suitable prototype, the function of these course correction secondary engines 19a and 19b may be enhanced by the presence of a fin or jibe, as for example a substantially flat optional element, set in a parallel plane to a median plane of the body 10a and adjustable by a pivot-type connection with an axis parallel to a median axis of the body 10a. Like a jibe used in aeronautics, such an optional element, not shown by the figures for simplification purposes, can be very well controlled by an actuator and electrical controls. Such electrical controls may be done by the electronic processing system present on the body 10a of the device in conjunction with those for 19a and 19b engines.

The platform 11 of the device is being stretched along a longitudinal axis of the body 10a and the seating position of the passenger 1, meaning that it is not easy for passenger 1 to control a substantially horizontal level along the longitudinal axis AL10. To automatically correct the horizontality of the level, this propulsion device may further comprise the level correction secondary engines 19c and 19d. These latter engines are suitably, but are not limited to, in the form of electric turbines. They are respectively located at the ends of the body 10a of the device and held by the support system 14. It is set in a same direction parallel to a central axis AM of the body 10a of the device 10. It allows, like the course correction secondary engines 19a and 19b, to maintain a substantially horizontal position along a longitudinal axis AL of the body 10a in the absence of any control instruction, willing to dive the body 10a or otherwise see "nose" of the body 10a. For this, the 19c and 19d engines are alternately actuated via power commands generated by the processing system present on the device body 10, interpreting the information provided by the level sensors and/or trajectory of the body 10a. Thus, when the device is unintentionally unbalanced by a gust of wind, the front thereof being higher than rear of the body 10a, the engine 19d on the back of the body 10a is actuated to automatically correct horizontality to the level, thus discharging the passenger 1 of any balancing of the such level.

Conversely, the level of the body 10a can be voluntarily modified by the passenger 1 by means of driving instructions mentioned above from the processing system on the body 10a of the device 10. The passenger 1 may modify at will all the directions of movement of the propulsion device with great intuitiveness like a driver of a regular motorcycle.

The disclosure provides as an option to turn off the automatic operation of the course correction secondary engines 19a, 19b and/or level correction 19c, 19d, that is to say that by allowing only operating the level and/or course sensors 10a present on the body, to maintain the course or level regardless of the driving instructions defined from the will of the passenger. This deactivation and/or reactivation may be determined by the passenger through a suitable human-machine interface, for example a button present on the handlebars 11c, the electronic processing of the body 10a considering the information provided by this a man-machine interface to develop and transmit such course keeping orders and/or level to the secondary engines, only if this interface acts to assist on the benefit to the passenger's will. If not, the driver passenger 1 will have a device direction to perform certain maneuvers for which it does not want assistance. Such functionality can be generalized to any device according to the disclosure.

The description of the body 10a of this device on Figures 2A to 2F is deliberately focusing on the primordial elements for operating the device. However, as the device previously shown in Figure 1A in particular, the body 10a this second example of propulsion device according to the disclosure may usefully comprise a projecting system, not shown in Figures 2A to 2F, work together with the platform 11 and/or the support system 14 and arranged to prevent shock or direct contact between the ground and the thruster unit 12 of the device 10. Such projecting system may consist in particular of foot lengths sufficient for that the exhaust nozzles of thruster unit 12 cannot hit the ground and also to provide stability when the device is placed on the floor or on a takeoff station also not specified by Figures 2A to 2F so that the passenger 1 can effectively take position on the platform 11. Alternatively, such projecting system could consist of a pair of skis or other elements able to provide stability according to the type of ground or the support of the device 10. Usefully, such projecting system may be provided as being folding or retractable, for example telescopic. The electronic processing system of the body 10a may be arranged to respectively control a retraction and/or automatic placing of this projecting system as soon as the moving speed of the body 10a exceeds or is below a predetermined speed, for example fifty kilometers per hour, and thus improving aerodynamics.

Alternatively, this retraction and/or placement may be activated by pressing from the passenger 1 of a human-specific machine interface such as a button or lever in communication with this processing system on the body 10a or directly with an actuator of this projecting system.

The body 10a may further comprise of potential fairing elements, not described on Figures 2A to 2F, interacting with the platform 11 and/or the support system 14 by any mechanical connection reversibly or irreversibly of embedding type (welding, screwing, for example) or with the platform 11 forming a single physical kit. The function of such fairing is to prevent direct contact between the thruster unit 12 and the passenger 1. The morphology (size and shape) of such fairing will therefore be arranged to fit the dimensions of the thruster unit 12, confer an aesthetic and/or treat the aerodynamics of the body 10a of the propulsion device, while limiting any inconvenience the passenger 1. It is indeed important to be able to limit the contact between the passenger and the thruster unit to prevent injury to the latter the temperature of the outer casing of the thruster unit 12 can get very high quickly. In addition, such fairing may include one or more air intakes for supplying fluid to the engines. Such vents can be equipped with grids to prevent aspiration of foreign bodies (leaves, debris, birds, etc.). The material choice provided to create this fairing will depend on the maximum temperature of the thruster unit 12, in direct vicinity to the elements of this fairing, so that it does not alter the structure thereof.

Finally, to feed the thermal engines of the body 10a of the device 10, the body 10a may comprise one or more housing arranged to contain one or more tanks of liquid or gaseous fuel required for the operation of the thruster units, e.g. kerosene. Such tanks are not shown in Figures by 2A to 2F for simplification purposes. To prevent any imbalance not automatically compensated by the course correction secondary engines 19a and 19b, the tank will be positioned closer to a PT transverse plane through the center of gravity CG of the body 10a, and along an axis belonging to a longitudinal median plane PM CG10 passing through the center of gravity. Also for simplification purposes, the Figures do not describe the fluid connection, comprising for example a set of hoses, manifolds and/or routes, or between the fuel tanks and engines of the body 10a for conveying the fuel to the engines. Like the first prototype described above in relation with Figure 1A, the disclosure provides that one can add to the passenger 1 seats an auxiliary fuel tank that could, if necessary, also be in fluid communication with the engines. In addition, the body 10a, particularly the clothing and/or accessories worn by the passenger 1 may comprise one or more sources into electrical energy, for example one or more battery (s), solar panels or wind generators, etc., connected to devices requiring such power supply, such as, for example, the processing system, sensors, electric turbines.

Figure 3 shows a brief view from below of a simplified vehicle according to the disclosure, generalizing somehow the operation of the disclosure in any flying vehicle equivalent to an automobile, transport of goods, products and/or passengers.

As indicated in Figure 3, the body of such a device includes a platform 11 and support system 14, that can work together with, or comprise, a thruster unit comprising one or more thruster sub-units, in this case two thruster subunits 12a and 12b of eight thermal engines each. The number of subunits and the respective numbers of engines on such thruster subunits will be determined depending on the configuration of the body of the propulsion device, the load that is to be conveyed and the performance and autonomy sought.

For conferring maneuverability to such vehicle, it is suitable to arrange the thruster unit, so that the distance between the ejecting direction of gas flow through the jet nozzle of each engine and the orthogonal projection of the ejecting direction of gas flow in a median plane passing through the vehicle body center of gravity is minimized.

Moreover, in order to discharge any compensation of unexpected course loss, such vehicle includes course correction secondary engines 19a and 19b. In conjunction with Figure 3, such secondary engines are positioned laterally along the lines of those discussed related with Figure 1A. They could, alternatively or additionally, be arranged like the course correction engine described in Figure 2A. Finally, to maintain or change the horizontal level of such vehicle along the longitudinal axis, the vehicle may include level correction engines 19c and 19d substantially disposed at the ends of the body of the vehicle.

According to the width thereof, it is possible to operate only two engines, like those described in relation with Figure 2A, particularly two pairs or two other sets of engines, in order to improve stability. In this case, the vehicle described according to Figure 3 has two pairs of level correction engines 19c and 19d located in the corners of the body of the vehicle. Any type of man-machine interface that develops flying instructions could also be used. Such vehicle may include electronic means for processing such instructions to develop throttles to different engines and the level and/or course sensors, the information produced by these systems are considered in conjunction with the instructions of driving by the processing system for generating power commands.

Whatever the configuration of the body of such a propulsion device according to the disclosure, this device provides a large number of playful applications and/or services. The disclosure revolutionizes transportation as we consider it today and would not be limited only by the examples of use cited above.

Accessories to further enhance the playfulness or the operating conditions of such a device could also be made, especially in lighting, navigational aids, remote control with or without passengers, etc.

For example, such a device may include means for long-range communication to interact with a remote-control station, so that such station develops interpretable driving instructions by electronic processing systems to the device in a clear manner. Alternatively, this electronic processing system may include memory displacement coordinates indicated before a flight or during such a flight by a passenger to produce the power commands issued to different engines of the device and reach a destination without passenger assistance. This electronic processing system can take advantage of the presence of a GNSS receiver, as discussed above, to know at any moment the geographical position of the device during its journey.

The disclosure also provides for the presence of any man-machine interface adapted to show in a graphical, sound or kinesthetic way to the passenger, information related to the operation of the propulsion device. A vision system with such information integrated to a visor on a helmet and/or instruction detection by analyzing driving instructions of the movements of the iris of a passenger eye of carrying such helmet could, for example, be considered.

As shown in Figure 1F in connection with the non-limiting prototype of a thruster unit 12 in Figure 1E, the disclosure also plans to add to part or all of the engines or thrust subunits 12a, 12b with an output of steerable fluid, of cone type, of an adjustable fluid outlet of a jet ski, for example, which would operate together with the ejection nozzle of the gas flow of the or the engines concerned. This is in Figure 1F, which describes two views, respectively front and side of an example of thrust unit 12 having two thrust subunits 12a and 12b. Among the four engines, Figure 1F highlights the engine 12b1 whose nominal direction of gas flow ejection AL12b is represented by a dotted line.

It is possible to see that the gas flow of such engine exhaust nozzle 12b1 works together with a movable mounted fluid output 12ex, such an adjustable cone, according to a mechanical connection axis pivot type 12ax parallel to a transverse axis of body 10a of the device described in Figure 1A. Such adjustable fluid output can describe, in a median plane of the body 10a, an angle δ around the axis 12ax. Thus, an engine of a thruster unit according to the disclosure being dynamically adjustable or not, the processing system of the body of a propulsion device can be adapted to control an actuator of such adjustable fluid output for deflecting the fluid ejection direction of the engine in particular by rotation around a parallel axis to a transverse axis of the device body. In this way, it becomes possible, without having to tilt the engine and/or the body of the propelling device as such, perform a forward movement of the device when such fluid outlet is directed towards the rear of the latter and vice versa. This function can be operated on demand by the passenger, for example via a request of an adapted man-machine interface, like the device, known as TRIM, equipping many speedboats motors consisting of an actuator mounted on the fixing bracket of the motor and controlled by a button or a trigger by the passengers of such boat. The TRIM effect is to dismiss or bring closer the motor of the boat transom, in order to change the thrust angle of the motorized propulsion and, consequently, the level of the boat.

Such adaptation of the fluid outlets of the engines of a propulsion device according to the disclosure, it is consistent with the first, second or third prototypes, that is to say such as those described on the examples according to Figures 1A, 2A or 3, favors straight-lined movements or travel speed, of the propulsion device while maintaining the level horizontal to the body of the latter.

Figure 5 illustrates an exemplary processing system for the propulsion device according to the disclosure. In one aspect, the controller 350 may be implemented as a single control implementing one or more aspects of the propulsion device 10. In another aspect, multiple controllers 350 may be implemented with each implementing one or more aspects of the propulsion device 10. For example, individual controllers 350 may be implemented for each of the thrust system 12, subthrust systems 12a, 12b, and each booster or thruster 12a1, 12a2, etc. of the propulsion device 10 (or combinations thereof). In one aspect, one controller 350 may be implemented for each secondary engine/propeller 19 of the propulsion device.

The controller 350 may receive sensor outputs from one or more sensors 372 and/or other sensors described herein, such as a temperature sensor sensing temperature from any part of the thrust system 12 and associated system, a pressure sensor sensing pressure from a part of the thrust system 12 and associated system, a position sensor sensing a position of a part of the thrust system 12 and associated system, an RPM sensor sensing rotations of the thrust system 12 and associated system, a fuel flow sensor sensing fuel flow to the thrust system 12 and associated components, a fuel pressure sensor sensing fuel pressure to the thrust system 12 and associated system, a vibration sensor sensing vibration of the thrust system 12, associated systems or components and the like. In a similar manner, the controller 350 may receive similar sensor outputs from one or more sensors from the secondary engine/propeller 19.

The controller 350 may include a processor 352. This processor 352 may be operably connected to a power supply 354, a memory 356, a clock 358, an analog to digital converter (A/D) 360, an input/output (I/O) port 362, and the like. The I/O port 362 may be configured to receive signals from any suitably attached electronic device and forward these signals from the A/D 360 and/or to processor 352. These signals include signals from the sensors 372. If the signals are in analog format, the signals may proceed via the A/D 360. In this regard, the A/D 360 may be configured to receive analog format signals and convert these signals into corresponding digital format signals. The controller 350 may include a transceiver 380 configured to transmit signals over a wired and/or wireless communication channel as defined herein.

The controller 350 may include a GNSS 376 receiver and processor that may estimate the location, velocity, heading, altitude, and the like of the device 10. The controller 350 may include an inertial navigation system 384 that may estimate the location, velocity, heading, altitude, and the like of the device 10. The inertial navigation system 384 may be implemented as a navigation aid that uses the processor 352, motion sensors, accelerometers, rotation sensors, gyroscopes, and the like to calculate via dead reckoning its location, velocity, heading, altitude, and the like without the need for external references. Moreover, the controller 350 may also include a terrain recognizing unit configured to capture a photo or visual indication of local terrain or geographical landmarks, recognize the terrain or one or more geographical landmarks, and determine a location of the device 10 based on the recognition of terrain.

The controller 350 may include a digital to analog converter (DAC) 370 that may be configured to receive digital format signals from the processor 352, convert these signals to analog format, and forward the analog signals from the I/O port 362. In this manner, the thrust system 12 components 382 configured to utilize analog signals may receive communications or be driven by the processor 352. The components 382 may include a fuel injection system for the thrust system 12, a nozzle control for the thrust system 12, fuel pumps, fuel valves, and the like. Similarly, the secondary engine/propeller 19 may receive communications or be driven by the processor 352 as well. In one aspect, the controller 350 may exclusively control the secondary engine/propeller 19 in order to control a yaw of the propulsion device 10.

The processor 352 may be configured to receive and transmit signals to and from the DAC 370, A/D 360 and/or the I/O port 362. The processor 352 may be further configured to receive time signals from the clock 358. In addition, the processor 352 may be configured to store and retrieve electronic data to and from the memory 356. The controller 350 may further include a display 368, an input device 364, and a read-only memory (ROM) 374. Finally, the processor 352 may include a program stored in the memory 356 executed by the processor 352 to execute the process 1000 described herein.

The controller 350 and I/O port 362 may be configured to control operation of the thrust device 10 including the components 382 and receive signals from the thrust device 10. These signals may include signals from the sensors 372 and the like. Likewise, the controller 350 and I/O port 362 may be configured to control operation of the secondary engine/propeller 19 including associated components and receive signals from the secondary engine/propeller 19.

The controller 350 may control operation of the thrust device 10, and the like. In this regard, when the sensors 372 sense a temperature, pressure, vibration, or the like of the thrust system 12 that is outside a predetermined operating range, the controller 350 may reduce fuel flow to the thrust system 12 to prevent damage, prevent a safety issue or the like. Additionally, the controller 350 may increase fuel flow to the remaining subthrust systems 12a, 12b and/or individual boosters/thrusters to compensate for the reduced thrust from the failing component of the thrust system 12. Likewise, the controller 350 may control operation of the secondary engine/propeller 19, and the like in a similar manner. In this regard, when sensors sense a temperature, pressure, vibration, or the like of the secondary engine/propeller 19 that is outside a predetermined operating range, the controller 350 may reduce fuel flow to the secondary engine/propeller 19 to prevent damage, prevent a safety issue or the like.

Additionally, in one aspect there may be redundant sensors 372. In this regard, the controller 350 may sample the outputs from each of the redundant sensors 372. Thereafter, the controller 350 may compare the outputs from each of the redundant sensors 372 and discard values that appear erroneous. Finally, the controller 350 may average the values of each of the remaining redundant sensors 372 to provide a statistically more accurate sensor value. This process reduces false positive errors and increases safety.

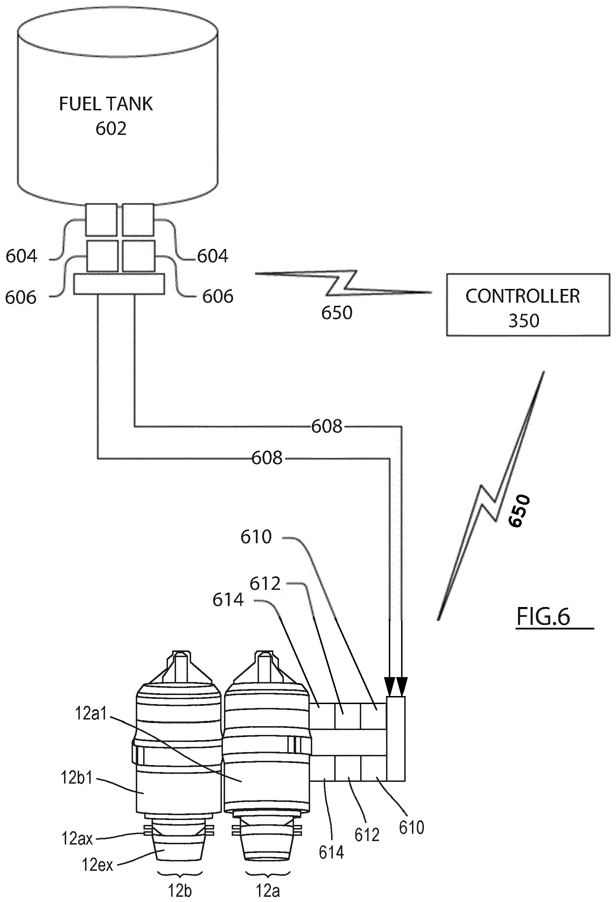

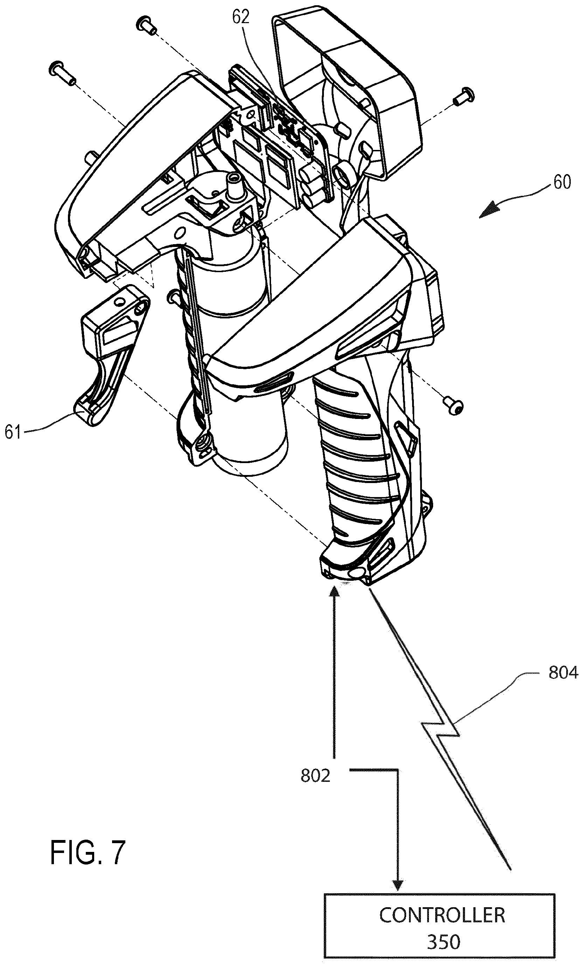

Figure 6 illustrates various aspects of redundant systems for the propulsion device according to an aspect of the disclosure. In particular, the thrust systems 12 described above may be implemented with a number of redundant systems to increase safety, reliability and the like. As schematically shown in Figure 7, a fuel tank 602 may include at least two fuel pumps 604. The fuel pumps 604 may operate in parallel to deliver fuel from the fuel tank 602 to each subthrust system 12a, 12b. In this regard, when one fuel pump 604 fails, the second fuel pump 604 may compensate for the failed fuel pump 604. Alternatively, each thruster or engine 12a1, 12a2, 12b1... may be coupled to an individual, independently-controlled fuel pump to further increase operational redundancy, stability, and safety. Moreover, each fuel pump 604 may include a fuel flow sensor, a rotation sensor, or the like indicated at 606. The controller 350 may sense and control operation of each of the fuel pumps 604 based on an output from the one or more sensors 606 over a communication channel 650 as defined herein. Although the fuel pumps 604 are shown arranged with the fuel tank 602, the fuel pumps 604 may be located anywhere between the fuel tank 602 and the thrust device 10.

When the controller 350 senses that one fuel pump 604 has failed, the controller 350 may then operate the remaining fuel pump 604 in a manner to compensate for the failed fuel pump 604. Alternatively, one fuel pump 604 may operate and the second fuel pump 604 may operate in a standby fashion. When the controller 350 senses that the operating fuel pump 604 has failed, the controller 350 may then operate the standby fuel pump 604 in a manner to compensate for the failed fuel pump 604.

The redundant systems of Figure 6 may further include a plurality of fuel lines 608. Implementing a plurality of fuel lines 608 ensures that if one fuel line fails to deliver fuel to the thrust device 10, then a backup fuel line 608 may compensate for the fuel line 608 failure. This may address situations where the fuel line is clogged, is damaged, is kinked, and the like. Moreover, each fuel line 608 may include a fuel flow sensor 610. The controller 350 may sense and control operation of each fuel line 608 through operation of both fuel pumps 604 based on an output from the fuel flow sensor 610 to compensate for a failed fuel line 608.

The redundant systems of Figure 6 may further include a plurality of fuel valve devices 612. Implementing a plurality of fuel valve devices 612 ensures that if one fuel valve device 612 fails to deliver fuel to the thrust device 10, then a backup fuel valve device 612 may compensate for the fuel valve device 612 failure. Moreover, each fuel valve device 612 may include a failure sensor. The controller 350 may sense and control, over a communication channel 650 as defined herein, operation of each fuel valve device 612 based on an output from the failure sensor to compensate for a failed fuel valve device 612.

The redundant systems of Figure 6 may further include a plurality of fuel injection devices 614. Implementing a plurality of fuel injection devices 614 ensures that if one fuel injection device fails to deliver fuel to the thrust device 10, then a backup fuel injection device 614 may compensate for the fuel injection device 614 failure. Moreover, each fuel injection device 614 may include a failure sensor. The controller 350 may sense and control, over a communication channel 650 as defined herein, operation of each fuel injection device 614 based on an output from the failure sensor to compensate for a failed fuel injection device 614. The redundant feature may include having one controller 350 implemented for each sub-thrust system 12a, 12b and/or each individual engine/thruster 12a1, 12a2, 12b1.... of the propulsion device 10.

Figure 7 illustrates various additional aspects of redundant systems for the propulsion device according to an aspect of the disclosure. In particular, Figure 7 illustrates the man-machine interface 60 as a remote control to be held in the hand of passenger 1. In one aspect, the interface 60 has a gun-type form factor having a trigger 61 whose stroke can be interpreted as an instruction to increase the power of the thruster unit 12 when the trigger is operated by the passenger 1. The man machine interface 60 may include a controller that includes one or more of the various aspects of the controller 350.

In one aspect, the man machine interface 60 and controller may control yaw of the propulsion device by controlling the secondary engine/propeller 19. In this regard, operation of the man machine interface 60 may implement a percent rotation of the propulsion device consistent with movement of the man machine interface 60 determined by sensors, described above, included with the man machine interface 60. In other words, movement of the man machine interface 60 in the hands of the passenger 1 may control a percent rotation or yaw of the propulsion device.

The man machine interface 60 may communicate various control operations received from the passenger 1 by a wired communication channel 802 as defined herein to the controller 350. Redundantly, the man machine interface 60 may communicate various control operations received from the passenger 1 by a wireless communication channel 804 as defined herein to the controller 350. Accordingly, should one of the wired communication channel 802 or the wireless communication channel 804 fail, the other one the wired communication channel 802 or the wireless communication channel 804 may be utilized providing increased safety. In one aspect, the signaling provided by the wired communication channel 802 and the wireless communication channel 804 may include pulse width modulation. Other types of signaling are contemplated as well. In one aspect, signals may be generated by the man machine interface 60 in response to Hall effect sensors associated with the trigger and other input devices. Other types of sensors and inputs are contemplated as well. The controller 350 may utilize the redundant wired/wireless controls for any other sensor or control function in the propulsion device.

The man machine interface 60 may include other form factors and implementations as well. For example, the man machine interface 60 may include foot input that may allow the passenger 1 to control various aspects of the propulsion device via movement of their feet. In particular, the device 10 may include one or more control inputs or sensors 34 on the platform 11 proximate to the support means 16 where an operator's feet will be positioned. The sensors 34 may be positioned on the platform directly under the operator's feet and/or on the side of the feet (e.g., such as on the support means 16 or on a raised ledge or surface of the platform) to measure a lateral or partially-lateral force or pressure exerted by a side of each foot. The sensors 34 may measure, monitor, or otherwise assess a force, pressure, or other input from the operator's feet that can be communicated to other components of the device, such as controller 350, to adjust an operation of the primary and/or secondary thrust systems. In one example of such an operation and adjustment, the sensors 34 may measure or monitor a force or pressure of a first foot of the passenger (such as the left foot), and measure or monitor a force or pressure of a second foot of the passenger (such as the right foot). The measurements from the first and second feet may be compared to determine or calculate a difference, if any, there between. The calculation may be performed, for example, by a CPU or other component of the sensors 34 and/or the controller 350. The calculated or determined differential in measured force or pressure may then be used to trigger or initiate an adjustment of the primary and/or secondary thrust systems. In one aspect, the device 10 may have a preset differential threshold that is compared to the determined measurement differential, and an adjustment of the thrust systems is only performed if the measured differential is greater than (or alternatively, less than) the preset differential threshold. Upon comparison, a direction, fuel flow, thrust output, or other adjustment to the primary and/or secondary thrust systems may be performed to affect a speed, direction, yaw, roll, and/or pitch of the device.

Configuration of the sensors 34 may include a foursensor construct, where there is a sensor 34 for each toe region and heel region of each foot, which enables both left and right foot total differentiation as well as pressure and/or force monitoring of each toe and heel segment and differentials there between (e.g., monitor a difference between a left toe region and a right heel region, which may be indicative of a pivoting movement of the operator), thereby allowing the controller to be configured and programmed to modify flight and/or thrust output to accommodate, facilitate, or enhance hands-free steering and operation of the device 10 through physical movement and body shifting of the operator.

In an illustrative example of use, an operator may be positioned on the platform 11 for operation, and the primary and secondary thrust systems may be operated as disclosed herein to achieve flight. During flight, the operator may wish to steer or head in a direction to the left of the current heading. The operator may intuitively lean to the left, placing more pressure and weight on the left foot compared to the right foot. Depending on the weight and foot size of the operator, the difference in pressure exerted by the operator's left and right feet, and thus measured by the sensors, may be between approximately 1psi and 4 psi, while a measured weight or force difference may be between approximately one-fourth to the full body weight (plus any additional gear, instruments, weapons, or the like that the operator is carrying). Upon detecting this force or pressure differential, the controller 350 may adjust operation of the primary and/or secondary thrust systems to facilitate a stable turn towards the left. Thrust output of one of the primary sub-thrust systems may be increased (or directed in a different direction) to provide additional lift on the left side of the device to account for the increased force and to prevent excessive roll or tipping over. In addition, and/or alternatively to the primary thrust system modification, the secondary thrust system may be adjusted to provide a controlled yaw rate of rotation or change of direction to the left. Upon completing the turn or achieving the desired new direction heading, the operator may balance himself (or herself) back on both legs substantially equally, thus reducing the measured differential between the left foot and right foot (or portions thereof). The reduced measurement differential may thus signal the controller 350 and/or primary and secondary thrust systems to revert to normal operation or to otherwise operate to maintain the current heading and orientation of the device.

The scope or volume of adjustment of the primary and/or secondary thrust systems may be proportional to or otherwise correlated with a magnitude of the measured or calculated differential so that larger measured differentials result in larger adjustments of thrust output, direction, or the like to compensate, offset, or facilitate the interpreted action and force exerted by the operator. The correlated magnitude of the measured differential and the corresponding adjustment may be linear, may include a multiplier or quotient relationship, or may otherwise be mathematically or calculatingly related as needed or desired for a particular application or use of the device.

In addition to and/or as an example of the various level, yaw, and other orientation and/or flight characteristic sensors disclosed herein, a sensor 36 may be coupled to at least one of the operator 1, the device 10, or the interface 60 to measure a rate-of-change of direction in one or more planes of movement, such as a yaw rate. The sensor may communicate with the controller 350 to affect adjustment or operation of the primary and/or secondary thrust systems to limit a maximum experienced rate-of-change of direction (for example, to prevent excessive spinning which could destabilize or injure the operator) and/or to reduce the rate-of-change to substantially zero once a desired heading or direction of flight is achieved. For example, as described above, the device 10 may monitor force or pressure differential as an indicator and steering input form the operator. Once the operator ceases the body movement or stands upright to signal a desired heading, the device 10 may still be experiencing a yaw rate that would otherwise cause the device to deviate from the desired heading. Accordingly, the controller 350 can monitor or receive information from the sensor 36 (standing alone and/or in conjunction with information received from sensors 34) to counteract an existing yaw rate or other rate-of-change of direction by adjusting operation of the primary and/or secondary thrust systems to reduce the rate-of-change of direction and to stabilize or otherwise maintain a set heading and orientation of the device 10.

In another aspect, device 10 may include verbal or mouth inputs that allow the passenger 1 to control various aspects of the propulsion device via movement of their jaw and/or using voice recognition commands. For example, the device may include an oral input device 38 that is operable to receive an input and/or measure or monitor an oral condition, force, or pressure, and to communicate the received input to the controller 350 for subsequent processing, analysis, or other assessment that can then be used as at least a partial basis to operate, maintain, or adjust one or more features or components of the device 10. For example, the oral input device 38 may include one or more of a microphone, bite force or pressure sensor, and/or optical or other sensors monitoring an opening width or movement of the mouth and/or jaw. The oral input device 38 may be coupled to the helmet 904 in proximity to the operator's mouth for operation thereof.

In an example of use, the input device 38 may receive or measure an input provided by the operator. The input may include an increased force or bite pressure placed on the input device 38, an oral command spoken into the input device 38, an increased (or decreased) opening of the mouth, and/or physical movement of a portion of the operator's jaw. The input received by the input device 38 may be processed or communicated to the controller for analysis or processing to determine whether an operational change to the device 10 should be initiated. For example, the bit force or pressure may be compared to a preset threshold value, and if the measured value deviates sufficiently from the threshold value, the controller may implement an adjustment of the primary and/or secondary thrust systems, which may include increasing or decreasing thrust output, changing thrust direction, modifying fuel flow to one or more boosters or engines, or the like.

The scope or volume of adjustment of the primary and/or secondary thrust systems may be proportional to or otherwise correlated with a magnitude of the input received by the input device 38 so that input of larger magnitude (whether bite force, speech volume, mouth opening or movement) results in larger adjustments of thrust output, direction, or the like. The correlated magnitude of the measured differential and the corresponding adjustment may be linear, may include a multiplier or quotient relationship, or may otherwise be mathematically or calculatingly related as needed or desired for a particular application or use of the device.

In these implementations a benefit of using non-hand related inputs allows the passenger 1 freedom to use their hands for other tasks. In one military implementation, a soldier may be able to utilize their hands to fire weapons, control weapons, control munitions guidance devices, and the like. In another aspect, a maintenance worker may be able to use their hands to perform maintenance. An additional example may include coupling one or more controllers or aspects of the interface 60 used to control aspects of the device 10 directly to a weapon or tool that the passenger/operator 1 of the device 10 is holding. Other applications and variations are contemplated as well.

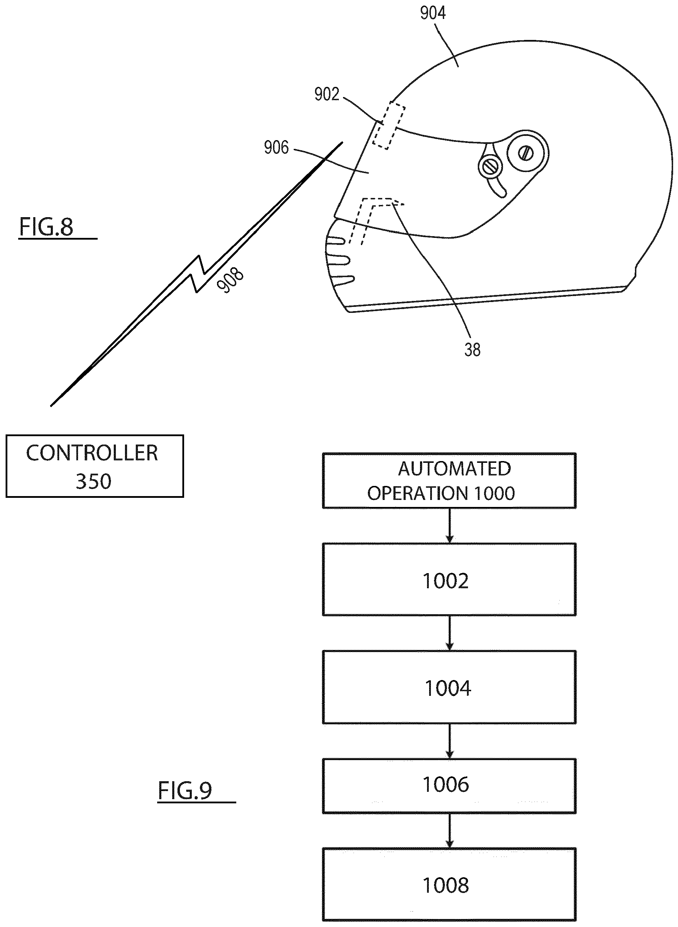

Figure 8 illustrates a display device for the pilot of the propulsion device according to an aspect of the disclosure. In particular, Figure 8 illustrates a display device 902 configured to display operating information to the user. In one aspect, the display device 902 may be attached to an exterior surface of a helmet 904. In another aspect, the display device may be attached to an interior surface of the helmet 904. In yet another aspect, the display device 902 may be attached to a visor 906 of the helmet 904. In one aspect, the display device 902 may be implemented as a Heads-Up Display (HUD) that may include an optical collimator system that includes a convex lens or concave mirror with a Cathode Ray Tube, light emitting diode, or liquid crystal display at its focus. In one aspect, the HUD may display on the visor 906. In another aspect, the display device 902 may be directly viewed and may be implemented by light emitting diodes, a liquid crystal display, and the like. In one aspect, the display device 902 may be arranged in the upper part of the field of view of the pilot to allow the pilot to view the ground more easily.

The display device 902 may display information provided by one or more of the sensors described herein, including without limitation, any one or more of airspeed, altitude, a horizon line, heading, turn/bank, slip/skid indicators, engine status, safety warnings, safety alerts, engine failure, wireless transmission failure, excessive vibration, excessive heat, imminent engine failure, low fuel, throttle position, and the like. The information provided by the display device 902 may be provided from the controller 350 via a wired connection or wireless connection 908 utilizing a communication channel as defined herein.

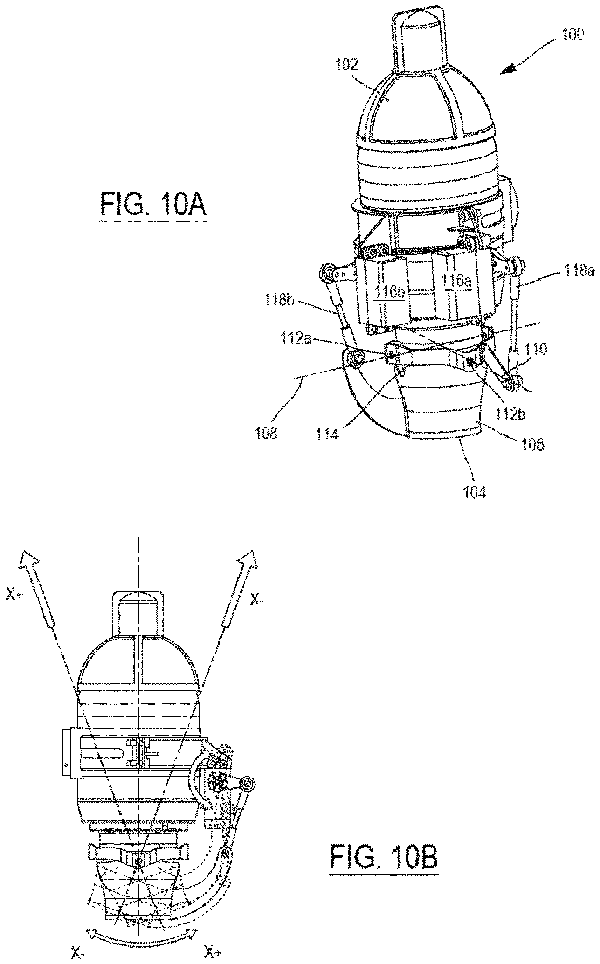

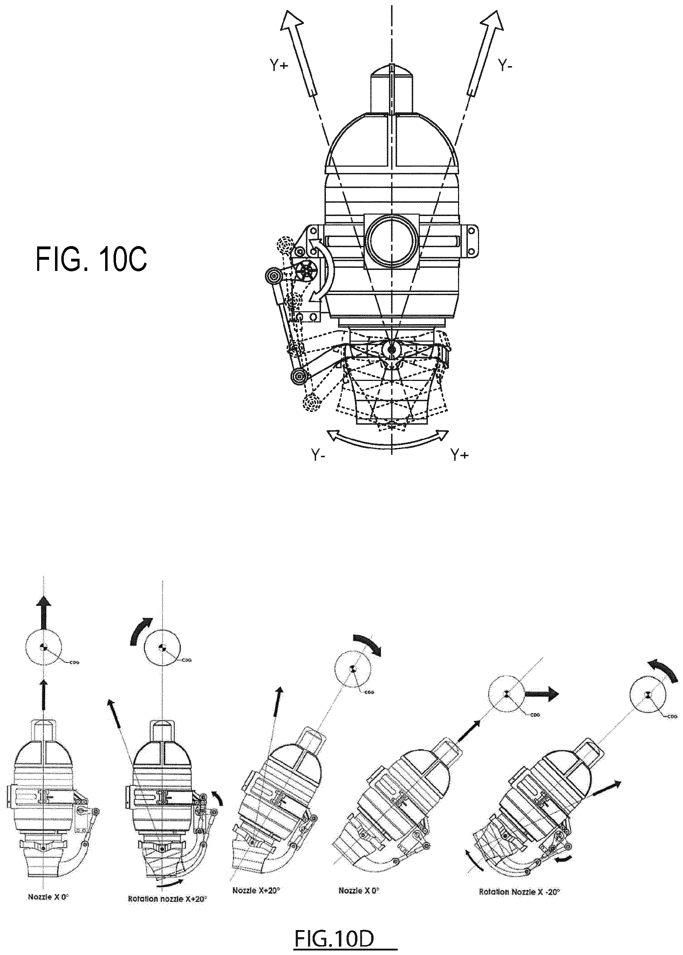

Figure 9 illustrates a process for the propulsion device according to an aspect of the disclosure. In particular, Figure 10 shows a process for automated operation 1000 of the propulsion device. The automated operation 1000 may be controlled by the controller 350 based on preloaded instructions to the memory 356. Alternatively, the automated operation 1000 may be controlled by input to the input device 364 in the field of operation. Alternatively, the automated operation 1000 may be controlled by wireless communications received by the transceiver 380 over a communication channel as defined herein.

The propulsion device as described herein, is very lightweight and may be carried by personnel as needed. In this regard, the propulsion device may include a lightweight housing to house and protect the propulsion device while the personnel move it from location to location. For example, during military operations, military personnel may carry the propulsion device for use in quick evacuation of military personnel such as during military operations. If a soldier is injured during the military operation, the propulsion device may be removed from the housing and quickly operated to remove the injured soldier. In one aspect, the propulsion device may include the necessary medical equipment to provide immediate medical care to the soldier such as intravenous solutions, wound care, and the like.

In another aspect, as shown in box 1002 the propulsion device may be sent to a desired location via GNSS, inertial guidance system, terrain recognition or the like. In this regard, if a soldier is injured, the propulsion device may be sent to their location in an unmanned or remote-piloted fashion.

As shown in box 1004, the propulsion device may receive an occupant once it reaches the desired location or once it is removed from its housing. In one aspect, the configuration of the propulsion device may include a stretcher type configuration. This configuration may allow the passenger to be seated or lying.

As shown in box 1006, the propulsion device may be sent to a safe location. In this regard, once a passenger is loaded into the stretcher configuration of the propulsion device, the man machine interface 60 may be actuated to move the propulsion device to a safe location. In this regard, if the propulsion device is being used for medical evacuation during military operations, it may be prudent to move the injured soldier as quickly as possible from the battlefield to prevent further injury. Moreover, sending the propulsion device quickly away from a particular battlefield location may allow for the GNSS 376 to obtain an accurate location. For example, battlefield locations often are subjected to satellite location jammers. Immediately sending the propulsion device to an altitude of several thousand feet will avoid the satellite location jammers and allow the GNSS 376 to obtain an accurate location. In another aspect, the propulsion device may utilize the inertial navigation system 384 or terrain recognition to head toward a safe medical facility which may allow the GNSS 376 time to obtain an accurate location away from satellite jamming devices.

As shown in box 1008, the propulsion device may be sent to a location via GNSS, inertial guidance system, or the like. In this regard, once the propulsion device receives an accurate satellite location, the controller 350 may control the propulsion device to move to a medical facility where the injured personnel may receive a medical care.

Now referring to Figures 10A-10D, an example of a thrust engine/booster unit 100 with a selectively controllable multi-axis thrust output is shown. The thrust engine 100 may generally include or embody a turbojet engine, a turbofan engine, and/or a turboprop engine, or variations thereof providing thrust through combustion and fluid flow principles. The thrust engine 100 may be implemented with any of the personal propulsion devices and associated components, systems, and operations disclosed herein. The thrust engine 100 may, for example, be implemented into the propulsion device 10 or examples and variations thereof as a thruster unit 12a1, 12a2, 12b1, 12b2 or the like providing thrust to the device 10.

The thrust engine 100 may generally include or define an intake end or region 102 where air or other fluid is entrained into the engine, and a thrust output or exhaust end or region 104 where compressed, combusted, and/or pressurized fluid is ejected to generate thrust. The thrust engine 100 may include or define a nozzle 106 proximate the thrust output region 104, where the nozzle 106 is movably coupled to the thrust engine 100 such that the nozzle can move - and direct thrust output - along two separate axes, a first axis 108 (e.g., "Y"-axis) and a second axis 110 (e.g., "X"-axis) substantially perpendicular to the first axis. The pivotability about the two axes may be implemented or accomplished by a collar 111 that is pivotably coupled to the thrust engine 100 at a first joint 112a providing pivotability of the nozzle 106 about the first axis 108, and second joint 112b linking the nozzle 106 to the collar 111 that provides pivotability of the nozzle 106 about the second axis 110. The collar 111 includes a downward deflection towards the second joint 112b, and further includes a recessed or cut-out segment 114 just under the first joint 112a to provide the multi-axis maneuverability.

Selective adjustment of the position of the nozzle 106 may be achieved through the operation of one or more actuators coupled to the thrust engine 100 and/or the propulsion devices disclosed herein. For example, a first actuator 116a may be coupled to the nozzle 106 through a first armature or linkage 118a to control movement of the nozzle 106 about the first axis 108. A second actuator 116b may be coupled to the nozzle 106 through a second armature or linkage 118b to control movement of the nozzle 106 about the second axis 110. The actuators may be powered or operated pneumatically, electrically, hydraulically, or otherwise to provide the controlled movement and manipulation of the nozzle 106. The actuators 116a, 116b may be coupled to or otherwise in communication with the controllers, processors, or other components disclosed herein that provide for the controlled operation of the personal propulsion devices of the present disclosure.

Movement of the nozzle 106 about the engine 100, and the resulting thrust vector indicated by an arrow is illustrated about the second axis 110 ("X"-axis) in Figure 10B. The total range of movement of the nozzle 106 may be between approximately 15 degrees and approximately 60 degrees, e.g., from -7.5 degrees to +7.5 degrees with respect to a centerline axis, up to -30 degrees to +30 degrees with respect to a centerline axis. Other angular ranges may be implemented or tailored for particular applications or devices. Movement of the nozzle 106 about the engine 100 about the first axis 108 ("Y"-axis) and the resulting thrust vector indicated by an arrow is illustrated in FIG 10C. The angular range of motion of the nozzle 106 about the first axis 108 may be substantially similar to that of the range of motion about the second axis, e.g., between approximately 15 degrees and approximately 60 degrees.

The multi-axis movement of the nozzle 106 can provide varying thrust vectors to provide varying directional control when implemented with the propulsion devices disclosed herein, examples of which include a passenger or payload situated above the platform 11 and thrust systems of the device. For example, Figure 10D illustrates a plurality of varying angular positions of the nozzle 106 with respect to the X-axis (which reflects an angle about which the device would pitch in this example) and the thrust engine 100, the resulting thrust vector illustrated by an arrow along an axis of the nozzle, and the resulting movement of the device with the passenger or payload, represented by a circle and indicated by reference to a center of gravity "CDG" of the device and payload. In an example where the nozzle 106 is aligned with the centerline of the engine 100, e.g., a 0-degree orientation, the thrust output would not create any angular movement or change in pitch about the x-axis. In an example where the nozzle 106 is oriented approximately +20 degrees with the centerline of the engine 100, the thrust vector would impart a forward pitch about the x-axis, as indicated by the rotating arrow about the center of gravity "CDG" of the device and payload. Figure 10D also illustrates examples of resultant thrust vectors and movement of the device with the passenger or payload when the engine 100 is angled away from a vertical orientation, and the nozzle 106 is either aligned with or angularly positioned with respect to the engine 100.

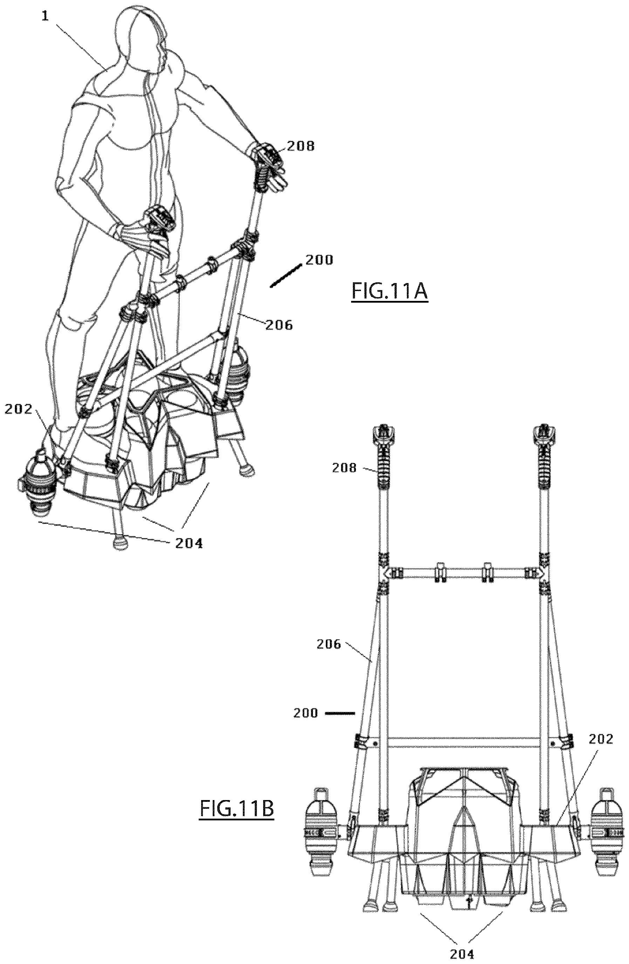

Now turning to Figures 11A-11D, an example of a personal propulsion device 200 is illustrated that may include features and operational characteristics disclosed herein, including with respect to the example of the propulsion devices 10 shown in Figure 1A through Figure 3, and the control/input features shown and described with respect to Figure 4 through Figure 9. The device 200 generally includes a platform 202 configured to support a passenger 1 thereon, with a thrust system or assembly 204 coupled to the platform to provide movement and flight. Though shown as configured to support a single passenger, the platform may vary in size, shape, and configuration to support multiple passengers, instruments, cargo, tools, or other cargo for a particular application and use.

The device 200 may include a passenger support frame 206 to provide a structure that a passenger 1 can grasp or otherwise hold onto while operating the device 200, thereby reducing the need to have fixed leg or feet bindings coupling the passenger to the platform 202. The device 200 thus allows a passenger to simply step onto and off of the device for operation, without needing to remove or unbind leg/feet fixtures. The frame 206 also provides a mechanical leveraging element allowing a passenger to impart a rotating or steering force onto the device using the passenger's arms, rather than solely limiting physical steering and manipulation of the device 200 to the user's feet and legs, as may be the case with the example of the device 10 shown in Figures 1A to 1E. Operation of the device 200 may thus be less fatiguing through the use of exerting force on the frame 206 with the passenger's arms, which is then amplified by the length of the frame as a torque arm to impart a rotation, pitch, roll, or other directional control of the device.

The device 200 may include user input controls/machine interface 208 mounted onto a portion of the device, such as an upper section of the frame 206, that is readily accessible to the passenger 1. The interface 208 may include components and features similar to those described with respect to interface 60 and/or as otherwise described with respect to the monitoring, measuring, and operation of propulsion device features disclosed herein. The device 200 may also include the various other sensors and operational components and the resulting propulsion device characteristics and features described herein and illustrated in any of the figures.

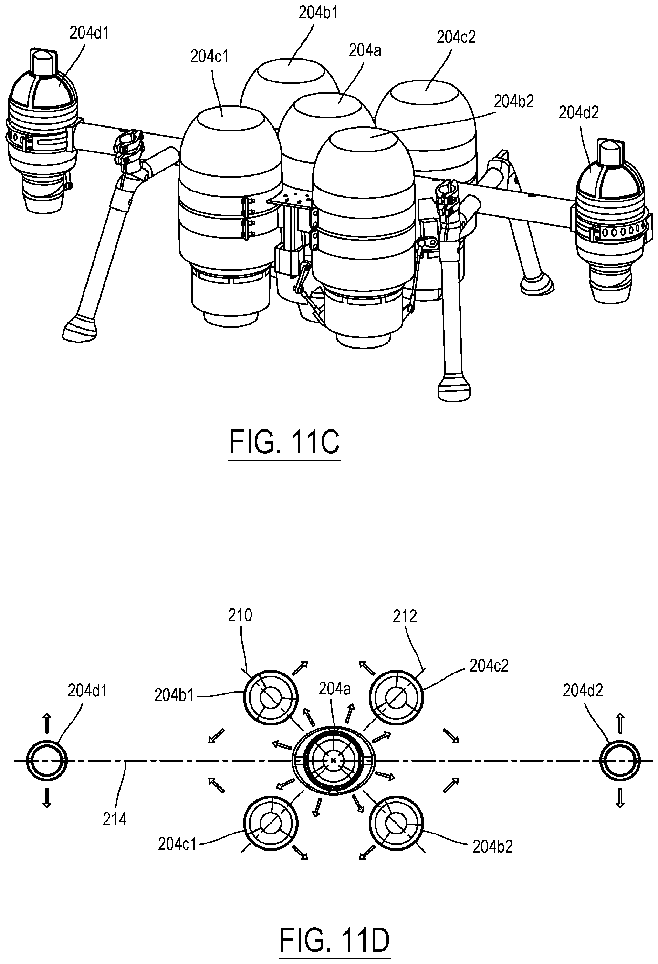

The thrust assembly 204 of the device 200 may include a plurality of thrust engine/booster units to provide thrust and directional movement. For example, as shown in Figures 11C-11D (in which portions of the device 200 have been removed for simplicity and clarity of illustration), the thrust assembly 204 may include a primary engine 204a located substantially in the center of the device 204 to generally provide thrust along a vertical centerline axis of the device 200. The primary engine 204a may include multi-axis thrust control to provide controllable thrust output and resulting thrust vectors along multiple axes of travel and orientation of the device 200, as shown by the arrows in Figure 11D. The primary engine 204a may, for example, include the multi-directional thrust control shown and described with respect to Figures 10A through 10D.

The thrust assembly 204 may include a first pair of engines 204b1, 204b2, with each engine located on opposite sides of the primary engine 204a along an axis 210. Each of the engines 204b1 and 204b2 may include directional thrust output capabilities at least along a direction substantially perpendicular to the axis 210 through a pivotable nozzle or the like (and may include multi-axis thrust control, similar to that described above), as shown by the arrows in Figure 11D, to primarily affect changes in pitch and roll.

The thrust assembly 204 may include a second pair of engines 204c1, 204c2, with each engine located on opposite sides of the primary engine 204a along an axis 212 that is substantially perpendicular to the axis 210. Each of the engines 204c1 and 204c2 may include directional thrust output capabilities at least along a direction substantially perpendicular to the axis 212 (and may include multi-axis thrust control, similar to that described above), as shown by the arrows in Figure 11D, to primarily affect changes in pitch and roll. The first and second pairs of engines may be clustered substantially around the vertical centerline of the device 200, thereby substantially circumscribing the primary engine 204a within relatively close proximity.

The thrust assembly 204 may include one or more engines 204d1, 204d2, with each engine located on opposite sides of the primary engine 204a along an axis 214 that extends substantially along a longitudinal axis of the device 200 that is angled at approximately 45 degrees with respect to each of the axes 210 and 212. Each of the engines 204d1 and 204d2 may include directional thrust output capabilities at least along a direction substantially perpendicular to the axis 214 (and may include multi-axis thrust control, similar to that described above), as shown by the arrows in Figure 11D, to primarily impart or control yaw movement. The engines 204d1, 204d2 may be positioned on opposite sides of the first thrust engine at a distance greater than a distance between the thrust engines 204b1, 204b2, 204c1, 204c2 to impart a greater torque arm on the device 200 to control yaw rates.

The compositional and placement of the thrust assembly 204 as shown and described provides multi-axis control and redundancy in the case of a failure of one or more of the engines. Each of the aforementioned engines may, for example, be one of a turbojet engine, a turbofan engine, and a turboprop engine, and may further include any of the directional and/or output control features described herein. Moreover, each of the aforementioned engines may be oriented in a substantially vertical direction, as illustrated, to provide vertical take-off and landing capability, as well as the other flight features provided herein. Control of the directional thrust output of the various engines described above may be achieved through the use of one or more actuators, controllers, and or processors as described herein, and may be adjusted automatically in response to various detected, measured, and/or sensed parameters to provide flight features as also described herein.

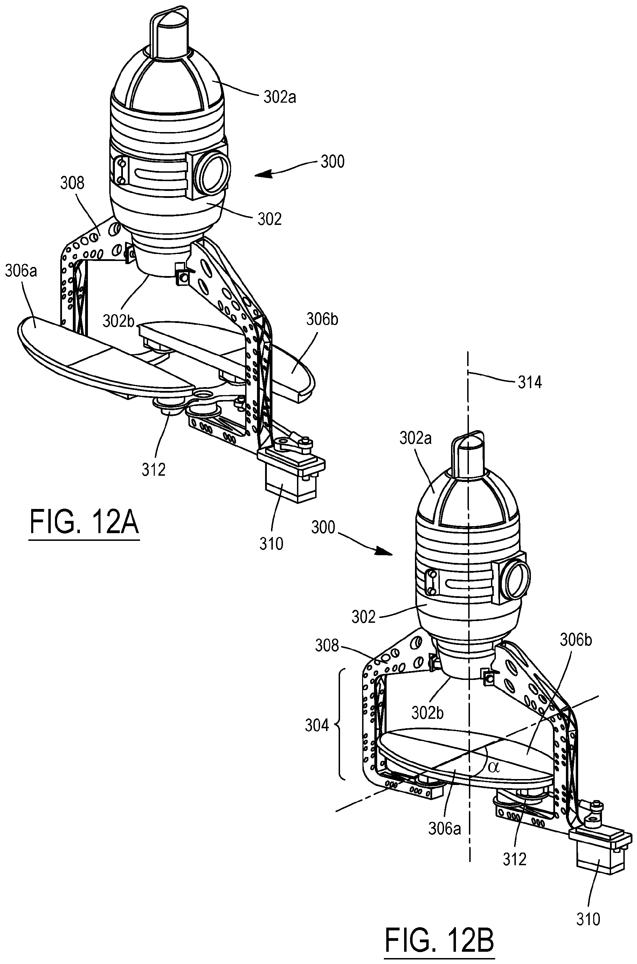

Now turning to Figures 12 through 15E, examples of thrust systems 300 for propulsion devices, such as those disclosed herein or otherwise, are shown that provide significantly improved throttle response characteristics compared to typical throttle responses involved with combustion or jet engines alone. For example, turbine engines are extremely capable mechanical devices that can provide significant thrust capabilities, but suffer from significant lag times between throttle input and thrust production, especially when going from low settings/RPMs to high settings/RPMs. Such lag can last several seconds due, in part, to turbine wheel inertia, compressor response, fuel supply, and combustion process that create a stack-up of latencies that delay the onset of higher thrust to meet the throttle demand. This can cause an operator, or an overall vehicle system, to err in control setting or throttle input that causes an over-shoot of the intended thrust point and a subsequent over-reaction in correction when too much thrust manifests later.

Multi-second thrust lag can have disastrous consequences when operating an aircraft or device that may need to have split second adjustments in throttle operation especially in situations needing evasive maneuvering and/or to overcome some mechanical/system failure. Typical airplane-like aircraft can offset thrust lag through manipulation of airfoil orientation to provide lift (e.g., by changing an angle of attack, extending flaps, etc.). Helicopters can similarly offset thrust lag through manipulation of the pitch of the rotor blades to increase or decrease resultant lift. However, in vertical takeoff/landing aircraft operations lacking airfoils or rotor blades, there is no such offset mechanism to address the thrust lag. Indeed, errors and overcompensation in manual throttle operations in vertical take-off aircraft have resulted in fatalities due to this lag.

The illustrated examples allow for precise, nearinstantaneous (e.g., hundredths of a second) thrust response employing one or more actuated guides mounted just below (assuming a vertically oriented engine) the turbine engine in the thrust output/flow path. When open, the thrust passes through the space between the guides, allowing the full thrust capability of the engine and providing vertical lift. When fully closed, the thrust hits and/or is diverted by the guides and dissipates. Since the guides are ultimately connected to the aircraft/device chassis, the downward force is neutralized within the aircraft structure, and the engine thrust does not materially contribute to lift significant enough to elevate the vehicle/device. The employed actuators may allow for precise positioning between these two extremes, creating a fully controllable range of thrust responses with the thrust engine at substantially constant or preset RPM and fuel flow, reducing the thrust lag to the time taken to transmit a control signal to the actuator, and the actuator to respond, which, at hundredths of a second, it multiple orders of magnitude faster than turbine engine lag.

Each of the examples of a thrust system 300 illustrated in Figures 12A-14B provide the aforementioned features and improvements. As shown in each of the examples, the system 300 generally includes a thrust engine 302, which may include a turbojet engine, a turbofan engine, and/or a turboprop engine such as those described elsewhere herein. The thrust engine generally includes or defines an intake end or region 302a where air or other fluid is entrained into the engine, and a thrust output or exhaust end or region 302b where compressed, combusted, and/or pressurized fluid is ejected to generate thrust. The system 300 may include a deflector assembly 304 that is operable and/or configured to deflect, absorb, and/or dissipate fluid exhausted from the exhaust region 302b of the engine 302 and the associated thrust and resultant thrust vector. The deflector assembly 304 may include one or more deflecting guides 306a, 306b that are selectively and controllably movable about the exhaust region 302b of the engine 302 and the associated thrust and resultant thrust vector in order to adjust the overall thrust force magnitude and vector imparted on the aircraft, vehicle, or device (such as those disclosed herein) implementing the thrust system 300. The deflector assembly diverts the thrust output into at least two thrust vectors angled with respect to an original axis of the thrust output (typically the longitudinal axis of the engine providing the thrust). The multiple thrust vectors may all have substantially the same magnitude, and may be angled between approximately 45 degrees and approximately 90 degrees with respect to the first axis. Each thrust vector may have substantially the same angle with respect to the original axis of the thrust output.

The deflecting guides 306a, 306b are coupled to the engine 302 (and/or otherwise to a frame or chassis of the aircraft, vehicle, or device employing the system 300) by one or more armatures, linkages, or other mechanical constructs 308. Movement/manipulation of the deflecting guides 306a, 306b with respect to the output of the engine 302 may be achieved by one or more actuators 310 coupled to the respective deflecting guides 306a, 306b. The actuators 310 may be operably coupled to the deflecting guides 306a, 306b by one or more armatures, linkages, or other mechanical constructs 312.

Referring now to Figures 12A and 12B, the deflecting guides 306a, 306b are substantially planar and are movable substantially within a plane that is substantially parallel to the upper surface of the guides 306a, 306b. Figure 12A shows an "open" configuration where the deflecting guides 306a, 306b are positioned substantially out of the path of the exhausted fluid/thrust output of the engine 302, thereby allowing the full force and magnitude of the thrust vector provided by the engine 302 to take effect upon the aircraft, vehicle, or device employing the system 300. Figure 12B shows a "closed" configuration where the deflecting guides 306a, 306b are juxtaposed against one another in the exhaust region 302b of the engine 302. The exhausted fluid/thrust output of the engine 302 is initially directed substantially along the longitudinal axis 314 of the engine 302. The exhausted fluid and resultant force is then directed towards the deflecting guides 306a, 306b, and is deflected or otherwise dispersed by the deflecting guides in multiple directions at an angle α away from the axis 314, with the magnitude of the resultant thrust vector along the axis 314 being substantially decreased.

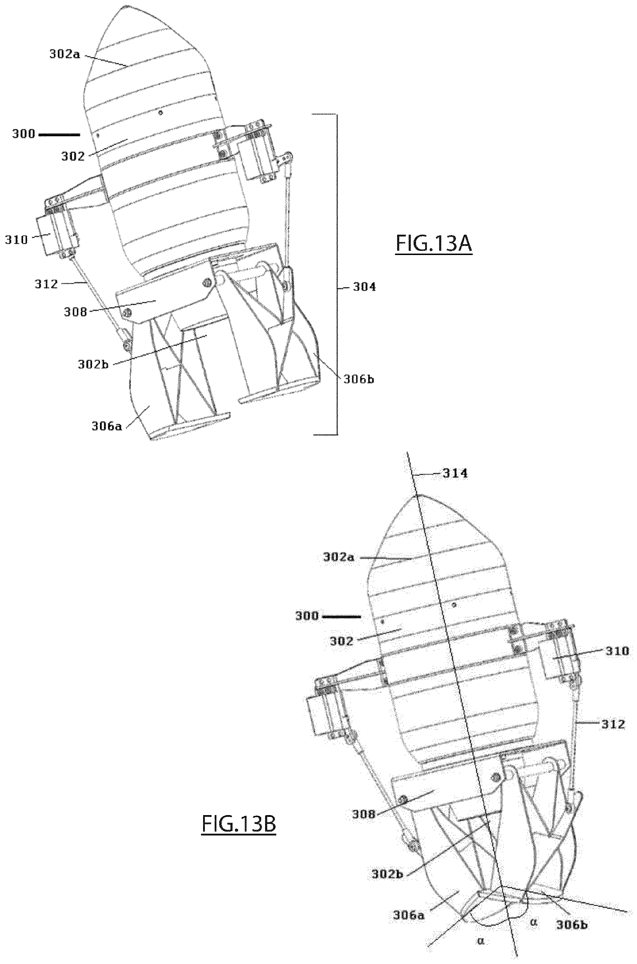

Referring now to Figures 13A and 13B, the deflecting guides 306a, 306b are pivotably coupled to a region proximate to the exhaust region 302b of the engine 302, enabling a "pinching movement" of the deflector assembly. Figure 13A shows an "open" configuration where the deflecting guides 306a, 306b are positioned substantially out of the path of the exhausted fluid/thrust output of the engine 302, thereby allowing the full force and magnitude of the thrust vector provided by the engine 302 to take effect upon the aircraft, vehicle, or device employing the system 300. Figure 13B shows a "closed" configuration where the deflecting guides 306a, 306b are closed or "pinched" together in the exhaust region 302b of the engine 302. The exhausted fluid/thrust output of the engine 302 is initially directed substantially along the longitudinal axis 314 of the engine 302. The exhausted fluid and resultant force is then directed towards the deflecting guides 306a, 306b. The deflecting guides 306a, 306b define a substantially planar bottom surface that is angled with respect to the axis 314 to deflect or otherwise disperse the exhausted fluid and resultant forces in two directions at an angle α away from the axis 314, with the magnitude of the resultant thrust vector along the axis 314 being substantially decreased.

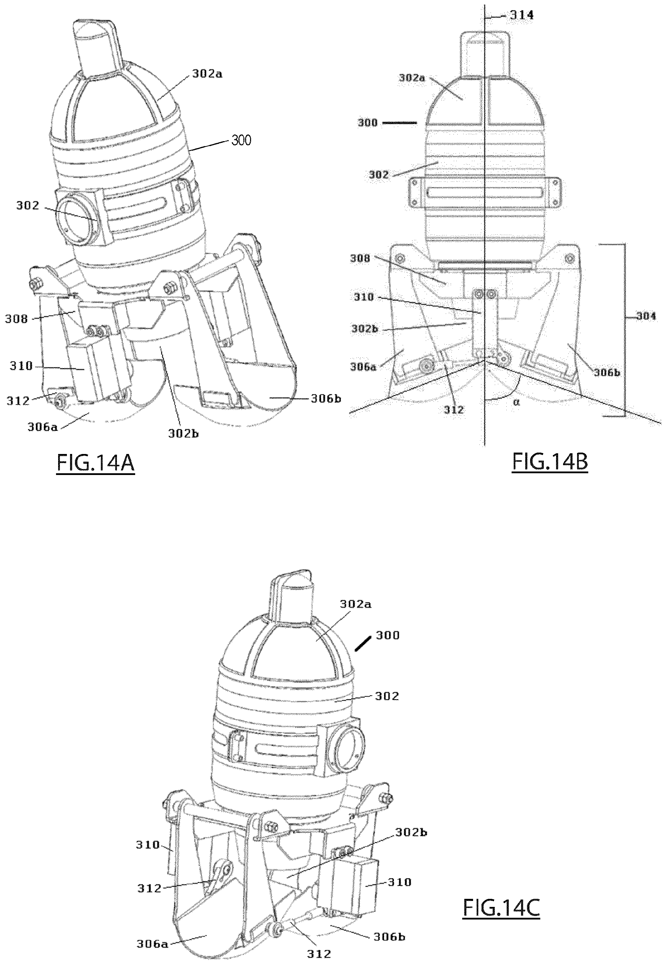

Referring now to Figures 14A and 14B, the deflecting guides 306a, 306b are pivotably coupled to a region proximate to the exhaust region 302b of the engine 302, enabling a "pinching movement" of the deflector assembly. The deflecting guides 306a, 306b are pivotable about an axis located above the thrust output region 302b of the thrust engine, which imparts a mechanical advantage for the resultant torque moment arm of the actuator to overcome and resist the thrust output forces of the engine 302 when closing and opening the deflecting guides 306a 306b during operation. Figure 14A shows an "open" configuration where the deflecting guides 306a, 306b are positioned substantially out of the path of the exhausted fluid/thrust output of the engine 302, thereby allowing the full force and magnitude of the thrust vector provided by the engine 302 to take effect upon the aircraft, vehicle, or device employing the system 300.

Figures 14B-14C show a "closed" configuration where the deflecting guides 306a, 306b are closed or "pinched" together in the exhaust region 302b of the engine 302. The exhausted fluid/thrust output of the engine 302 is initially directed substantially along the longitudinal axis 314 of the engine 302. The exhausted fluid and resultant force is then directed towards the deflecting guides 306a, 306b. The deflecting guides 306a, 306b define a substantially curvilinear, semi-circular surface that is angled with respect to the axis 314 to deflect or otherwise disperse the exhausted fluid and resultant forces in substantially two directions at an angle α away from the axis 314, with the magnitude of the resultant thrust vector along the axis 314 being substantially decreased.

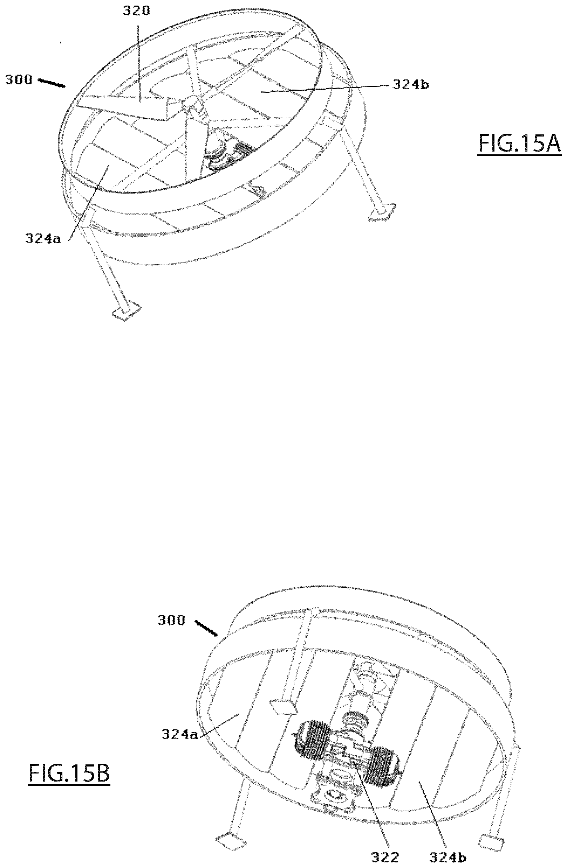

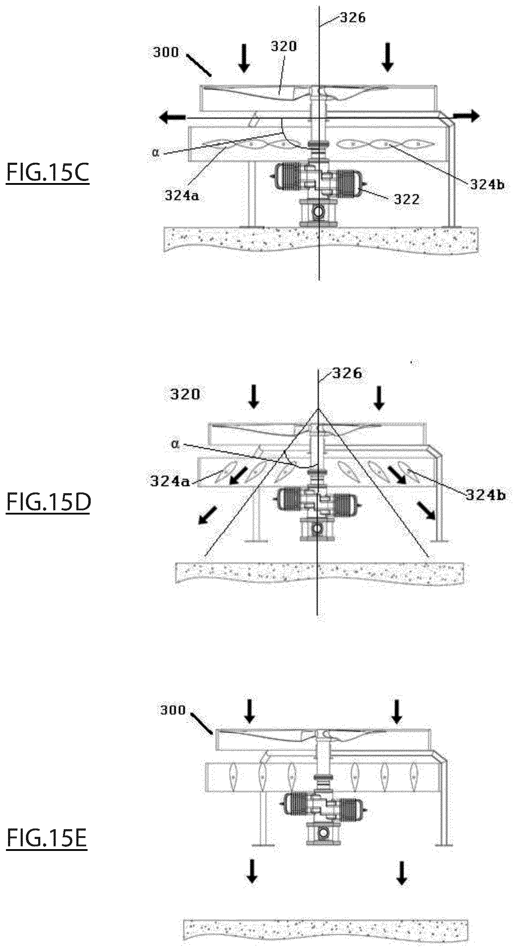

Now referring to Figures 15A-15E, an alternative example of the thrust system 300 is shown that employs a rotor 320 coupled to an engine 322 that drives revolutions of the rotor 320. The configuration may be employed in a ducted fan thrust system or other propeller/rotor system. The engine 322 may include a two-stroke engine having a torque or horsepower output sufficient to drive the mass and dimensions of the rotor. The deflector assembly of this example of the thrust system 300 includes a plurality of vanes that, similar to the deflecting guides described above, are operable and/or configured to deflect, absorb, and/or dissipate fluid driven by the rotor 320 and the associated thrust and resultant thrust vector. The plurality of vanes are selectively and controllably movable about an exhaust region of the rotor 320 and the associated thrust and resultant thrust vector in order to adjust the overall thrust force magnitude and vector imparted on the aircraft, vehicle, or device (such as those disclosed herein) implementing the thrust system 300. The plurality of vanes may substantially divert the thrust output into at least two thrust vectors angled with respect to an original axis of the thrust output (typically the longitudinal axis of the rotor providing the thrust). The multiple thrust vectors may all have substantially the same magnitude, and may be angled between approximately 45 degrees and approximately 90 degrees with respect to the first axis. Each thrust vector may have substantially the same angle with respect to the original axis of the thrust output. The vanes may be positioned a distance from the rotor 320 that is equal to two-times (2x) the rotor width to reduce or prevent undesirable backforce on the rotor and entrained air.

The vanes may include a first plurality of vanes 324a and a second plurality of vanes 324b positioned on opposite halves of the exhaust region of the rotor 320 and thrust assembly. The vanes may be coupled to the thrust assembly (and/or otherwise to a frame or chassis of the aircraft, vehicle, or device employing the system 300) by one or more armatures, linkages, or other mechanical constructs. Individual and independent movement/manipulation of the two pluralities of vanes with respect to the output of the rotor 320 may be achieved by one or more actuators (not shown) coupled to the respective vanes. The actuators may be operably coupled to the vanes by one or more armatures, linkages, or other mechanical constructs (not shown).

Figures 15A-15C show a "closed" configuration where the vanes 324a, 324b are closed (e.g., the vanes are substantially perpendicular to an axis 326 of rotation of the rotor to substantially prevent fluid flow therethrough along the axis 326) in the exhaust region of the rotor 320. The vanes thus deflect or otherwise disperse the exhausted fluid and resultant forces in substantially two directions at an angle α away from the axis 326 (which is substantially perpendicular in this configuration), with the magnitude of the resultant thrust vector along the axis 326 being substantially decreased or altogether eliminated.

Figure 15D shows a partially "open" configuration where the vanes 324a, 324b are positioned at a smaller angle α with respect to the axis 326, thereby allowing a selective portion of the full force and magnitude of the thrust vector provided by the rotor 320 to take effect upon the aircraft, vehicle, or device employing the system 300. Figure 15E shows an "open" configuration where the vanes 324a, 324b are positioned substantially parallel to the path of the exhausted fluid/thrust output of the rotor 320, thereby allowing the full force and magnitude of the thrust vector provided by the rotor 320 to take effect upon the aircraft, vehicle, or device employing the system 300.

The thrust systems 300 may be integrated with any of the propulsion devices disclosed herein, including with respect to the example of the propulsion devices 10 shown in Figure 1A through Figure 3 as well as that shown in Figures 11A-11D, and may also be implemented in whole or in part with the control/input features shown and described with respect to Figure 4 through Figure 9. Each of the aforementioned engines may, for example, be one of a turbojet engine, a turbofan engine, and a turboprop engine, and may further include any of the directional and/or output control features described herein. Moreover, each of the aforementioned engines may be oriented in a substantially vertical direction, as illustrated, to provide vertical take-off and landing capability, as well as the other flight features provided herein. Control of the thrust output of the systems 300 described above may be achieved through the use of one or more actuators, controllers, and or processors as described herein, and may be adjusted automatically in response to various detected, measured, and/or sensed parameters to provide flight features as also described herein.

Aspects of the disclosure may include communication channels that may be any type of wired or wireless electronic communications network, such as, e.g., a wired/wireless local area network (LAN), a wired/wireless personal area network (PAN), a wired/wireless home area network (HAN), a wired/wireless wide area network (WAN), a campus network, a metropolitan network, an enterprise private network, a virtual private network (VPN), an internetwork, a backbone network (BBN), a global area network (GAN), the Internet, an intranet, an extranet, an overlay network, Near field communication (NFC), a cellular telephone network, a Personal Communications Service (PCS), using known protocols such as the Global System for Mobile Communications (GSM), CDMA (Code-Division Multiple Access), GSM/EDGE and UMTS/HSPA network technologies, Long Term Evolution (LTE), 5G (5th generation mobile networks or 5th generation wireless systems), WiMAX, HSPA+, W-CDMA (Wideband Code-Division Multiple Access), CDMA2000 (also known as C2K or IMT Multi-Carrier (IMT-MC)), Wireless Fidelity (Wi-Fi), Bluetooth, and/or the like, and/or a combination of two or more thereof. The NFC standards cover communications protocols and data exchange formats, and are based on existing radio-frequency identification (RFID) standards including ISO/IEC 14443 and FeliCa. The standards include ISO/IEC 18092[3] and those defined by the NFC Forum.

Aspects of the present disclosure are described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks. Aspects of the disclosure may be implemented in any type of computing devices, such as, e.g., a desktop computer, personal computer, a laptop/mobile computer, a personal data assistant (PDA), a mobile phone, a tablet computer, cloud computing device, and the like, with wired/wireless communications capabilities via the communication channels.

Further in accordance with various aspects of the disclosure, the methods described herein are intended for operation with dedicated hardware implementations including, but not limited to, PCs, PDAs, semiconductors, application specific integrated circuits (ASIC), programmable logic arrays, cloud computing devices, and other hardware devices constructed to implement the methods described herein.

It should also be noted that the software implementations of the disclosure as described herein are optionally stored on a tangible storage medium, such as: a magnetic medium such as a disk or tape; a magneto-optical or optical medium such as a disk; or a solid-state medium such as a memory card or other package that houses one or more read-only (non-volatile) memories, random access memories, or other re-writable (volatile) memories. A digital file attachment to email or other self-contained information archive or set of archives is considered a distribution medium equivalent to a tangible storage medium. Accordingly, the disclosure is considered to include a tangible storage medium or distribution medium, as listed herein and including art-recognized equivalents and successor media, in which the software implementations herein are stored.

Additionally, the various aspects of the disclosure may be implemented in a non-generic computer implementation. Moreover, the various aspects of the disclosure set forth herein improve the functioning of the system as is apparent from the disclosure hereof. Furthermore, the various aspects of the disclosure involve computer hardware that it specifically programmed to solve the complex problem addressed by the disclosure. Accordingly, the various aspects of the disclosure improve the functioning of the system overall in its specific implementation to perform the process set forth by the disclosure and the claimed invention is as defined by the claims.

According to an example, the global navigation satellite system (GNSS) may include a device and/or system that may estimate its location based, at least in part, on signals received from space vehicles (SVs). In particular, such a device and/or system may obtain "pseudorange" measurements including approximations of distances between associated SVs and a navigation satellite receiver. In a particular example, such a pseudorange may be determined at a receiver that is capable of processing signals from one or more SVs as part of a Satellite Positioning System (SPS). Such an SPS may comprise, for example, a Global Positioning System (GPS), Galileo, Glonass, to name a few, or any SPS developed in the future. To determine its location, a satellite navigation receiver may obtain pseudorange measurements to three or more satellites as well as their positions at time of transmitting. Knowing the SV orbital parameters, these positions can be calculated for any point in time. A pseudorange measurement may then be determined based, at least in part, on the time a signal travels from an SV to the receiver, multiplied by the speed of light. While techniques described herein may be provided as implementations of location determination in GPS and/or Galileo types of SPS as specific illustrations according to particular examples, it should be understood that these techniques may also apply to other types of SPS, and that claimed subject matter is not limited in this respect.

It will be appreciated by persons skilled in the art that the present disclosure is not limited to what has been particularly shown and described herein above. In addition, unless mention was made above to the contrary, it should be noted that all of the accompanying drawings are not to scale. Of note, the system components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein. A variety of modifications and variations are possible in light of the above teachings without departing from the scope of the claimed invention, which is limited only by the following claims.

## Claims

1. Thrust system (300), comprising .
- a thrust engine (302) configured to provide a thrust output (302b) substantially along a first axis (314);
- a deflector assembly (304) movably coupled to the thrust engine (302) and including a pair of deflecting guides (306a, 306b) movable to selectively deflect a portion of the thrust output (302b), wherein the deflector assembly is configured to divert the thrust output (302b) into at least two thrust vectors angled with respect to the first axis (314);
- at least two actuators (310) coupled to the respective deflecting guides (306a, 306b) to controllably adjust a position of the respective deflecting guides (306a, 306b) with respect to the thrust engine (302);**characterized in that** said deflecting guides are displaceable toward and away from each other between a closed configuration in which said deflecting guides are juxtaposed against one another in the exhausted thrust output, and an open configuration in which said deflecting guides are out of the path of the exhausted thrust output.

2. Thrust system (300) according to claim 1, wherein the at least two thrust vectors all have substantially the same magnitude.

3. Thrust system (300) according to any of claims 1 or 2, wherein each thrust vector is angled between approximately 45 degrees and approximately 90 degrees with respect to the first axis (314).

4. Thrust system (300) according to any of claims 1 to 3, wherein each thrust vector has substantially the same angle with respect to the first axis (314).

5. Thrust system (300) according to any of claims 1 to 4, further comprising a controller in communication with the actuators (310), wherein the controller is configured to operate the actuators (310) in response to one or more signals from at least one of an operator (1) and a sensor.

6. Thrust system (300) according to any of claims 1 to 5, wherein the respective deflecting guides (306a, 306b) are each substantially planar.

7. Thrust system (300) according to any of claims 1 to 5, wherein the deflecting guides (306a, 306b) each define a substantially curvilinear surface that deflects the thrust output (302b).

8. Thrust system (300) according to claim 7, wherein the deflecting guides (306a, 306b) each define a surface having a substantially semi-circular crosssection that deflects the thrust output (302b).

9. Thrust system (300) according to any of claims 1 to 8, wherein the deflecting guides (306a, 306b) are pivotable about a second axis substantially perpendicular to the first axis (314).

10. Thrust system according to Claim 9, wherein the second axis is located above the thrust output (302b) of the thrust engine (300).

11. Thrust system (300) according to any of claims 1 to 10, wherein the thrust engine (302) is one of a turbojet engine, a turbofan engine, and a turboprop engine.

## Patentansprüche

1. Schubsystem (300), das Folgendes umfasst:
- ein Schubtriebwerk (302), das zum Bereitstellen eines Schubabtriebs (302b) im Wesentlichen entlang einer ersten Achse (314) konfiguriert ist;
- eine Ablenkanordnung (304), die beweglich mit dem Schubtriebwerk (302) gekoppelt ist und ein Paar Ablenkführungen (306a, 306b) enthält, die beweglich sind, um einen Teil des Schubabtriebs (302b) selektiv abzulenken, wobei die Ablenkanordnung so konfiguriert ist, dass sie den Schubabtrieb (302b) in mindestens zwei in Bezug auf die erste Achse (314) abgewinkelte Schubvektoren ablenkt;
- mindestens zwei Aktuatoren (310), die mit den jeweiligen Ablenkführungen (306a, 306b) gekoppelt sind, um eine Position der jeweiligen Ablenkführungen (306a, 306b) in Bezug auf das Schubtriebwerk (302) steuerbar zu justieren; **dadurch gekennzeichnet**, dassdie genannten Ablenkführungen aufeinander zu und voneinander weg zwischen einer geschlossenen Konfiguration, in der die genannten Ablenkführungen in dem ausgestoßenen Schubabtrieb nebeneinander liegen, und einer offenen Konfiguration verschiebbar sind, in der die genannten Ablenkführungen außerhalb des Pfads des ausgestoßenen Schubabtriebs liegen.

2. Schubsystem (300) nach Anspruch 1, wobei die mindestens zwei Schubvektoren alle im Wesentlichen die gleiche Größe haben.

3. Schubsystem (300) nach Anspruch 1 oder 2, wobei jeder Schubvektor um etwa 45 Grad bis etwa 90 Grad in Bezug auf die erste Achse (314) abgewinkelt ist.

4. Schubsystem (300) nach einem der Ansprüche 1 bis 3, wobei jeder Schubvektor im Wesentlichen den gleichen Winkel in Bezug auf die erste Achse (314) hat.

5. Schubsystem (300) nach einem der Ansprüche 1 bis 4, das ferner eine Steuerung in Verbindung mit den Aktuatoren (310) umfasst, wobei die Steuerung zum Betreiben der Aktuatoren (310) als Reaktion auf ein oder mehrere Signale von einem Bediener (1) und/oder einem Sensor konfiguriert ist.

6. Schubsystem (300) nach einem der Ansprüche 1 bis 5, wobei die jeweiligen Ablenkführungen (306a, 306b) jeweils im Wesentlichen planar sind.

7. Schubsystem (300) nach einem der Ansprüche 1 bis 5, wobei die Ablenkführungen (306a, 306b) jeweils eine im Wesentlichen krummlinige Oberfläche definieren, die den Schubabtrieb (302b) ablenkt.

8. Schubsystem (300) nach Anspruch 7, wobei die Ablenkführungen (306a, 306b) jeweils eine Fläche mit einem im Wesentlichen halbkreisförmigen Querschnitt definieren, die den Schubabtrieb (302b) ablenkt.

9. Schubsystem (300) nach einem der Ansprüche 1 bis 8, wobei die Ablenkführungen (306a, 306b) um eine zweite Achse im Wesentlichen lotrecht zur ersten Achse (314) schwenkbar sind.

10. Schubsystem nach Anspruch 9, wobei die zweite Achse sich oberhalb des Schubabtriebs (302b) des Schubtriebwerks (300) befindet.

11. Schubsystem (300) nach einem der Ansprüche 1 bis 10, wobei das Schubtriebwerk (302) eines von einem Turbojet-Triebwerk, einem Turbofan-Triebwerk und einem Turboprop-Triebwerk ist.

## Revendications

1. Système de poussée (300), comprenant :
- un moteur de poussée (302) configuré pour fournir une sortie de poussée (302b) substantiellement le long d'un premier axe (314) ;
- un ensemble déflecteur (304) couplé de manière mobile au moteur de poussée (302) et incluant une paire de guides déflecteurs (306a, 306b) aptes à bouger pour dévier sélectivement une portion de la sortie de poussée (302b), l'ensemble déflecteur étant configuré pour dévier la sortie de poussée (302b) dans au moins deux vecteurs de poussée inclinés par rapport au premier axe (314) ;
- au moins deux actionneurs (310) couplés aux guides déflecteurs respectifs (306a, 306b) afin d'ajuster de manière contrôlable une position des guides déflecteurs respectifs (306a, 306b) par rapport au moteur de poussée (302) ; **caractérisé en ce que** lesdits guides déflecteurs peuvent être déplacés pour se rapprocher et s'éloigner l'un de l'autre entre une configuration fermée dans laquelle lesdits guides déflecteurs sont juxtaposés l'un contre l'autre dans la sortie de poussée expulsée et une configuration ouverte dans laquelle lesdits guides de déflecteurs se situent hors du trajet de la sortie de poussée expulsée.

2. Système de poussée (300) selon la revendication 1, dans lequel les au moins deux vecteurs de poussée ont tous substantiellement la même norme.

3. Système de poussée (300) selon l'une quelconque des revendications 1 ou 2, dans lequel chaque vecteur de poussée est incliné entre approximativement 45 degrés et approximativement 90 degrés par rapport au premier axe (314) .

4. Système de poussée (300) selon l'une quelconque des revendications 1 à 3 dans lequel chaque vecteur de poussée a substantiellement le même angle par rapport au premier axe (314).

5. Système de poussée (300) selon l'une quelconque des revendications 1 à 4, comprenant en outre un contrôleur en communication avec les actionneurs (310), dans lequel le contrôleur est configuré pour commander les actionneurs (310) en réaction à un ou plusieurs signaux provenant d'un opérateur (1) et/ou d'un capteur.

6. Système de poussée (300) selon l'une quelconque des revendications 1 à 5, dans lequel les guides déflecteurs respectifs (306a, 306b) sont chacun substantiellement plans.

7. Système de poussée (300) selon l'une quelconque des revendications 1 à 5, dans lequel les guides déflecteurs (306a, 306b) définissent chacun une surface substantiellement curviligne qui dévie la sortie de poussée (302b).

8. Système de poussée (300) selon la revendication 7, dans lequel les guides déflecteurs (306a, 306b) définissent chacun une surface ayant une coupe transversale substantiellement semi-circulaire qui dévie la sortie de poussée (302b).

9. Système de poussée (300) selon l'une quelconque des revendications 1 à 8, dans lequel les guides déflecteurs (306a, 306b) sont pivotables autour d'un deuxième axe substantiellement perpendiculaire au premier axe (314).

10. Système de poussée selon la revendication 9, dans lequel le deuxième axe est situé au-dessus de la sortie de poussée (302b) du moteur de poussée (300).

11. Système de poussée (300) selon l'une quelconque des revendications 1 à 10, dans lequel le moteur de poussée (302) est l'un parmi un turboréacteur, une turbosoufflante, et un turbopropulseur.
